(19) Europäisches Patentamt / European Patent Office / Office européen des brevets

(11) **EP 4 714 905 A1**

(12) **EUROPEAN PATENT APPLICATION**

(43) Date of publication:
25.03.2026  Bulletin 2026/13

(21) Application number: 25202645.5

(22) Date of filing: 17.09.2025

(51) International Patent Classification (IPC):
*C01G 53/42* (2025.01)   *C01G 53/80* (2025.01)
*H01M 4/04* (2006.01)   *H01M 4/131* (2010.01)
*H01M 4/36* (2006.01)   *H01M 4/525* (2010.01)
*H01M 4/62* (2006.01)   *C01D 15/00* (2006.01)

(52) Cooperative Patent Classification (CPC):
**C01G 53/80; C01D 15/00; C01G 53/42;
H01M 4/0471; H01M 4/131; H01M 4/1391;
H01M 4/366; H01M 4/525; H01M 4/62;
H01M 10/0562;** C01P 2002/52; C01P 2002/85;
C01P 2004/03; C01P 2004/20; C01P 2004/50;
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 23.09.2024  KR 20240128558
13.06.2025  KR 20250078099

(71) Applicant: SAMSUNG SDI CO., LTD.
Yongin-si, Gyeonggi-do 17084 (KR)

(72) Inventors:
• KIM, Do-Yu
17084 Yongin-si, Gyeonggi-do (KR)
• YUN, Pilsang
17084 Yongin-si, Gyeonggi-do (KR)
• YANG, Hwichul
17084 Yongin-si, Gyeonggi-do (KR)
• CHO, Tae Ho
17084 Yongin-si, Gyeonggi-do (KR)

(74) Representative: Gulde & Partner
Patent- und Rechtsanwaltskanzlei mbB
Berliner Freiheit 2
10785 Berlin (DE)

(54) **POSITIVE ELECTRODE ACTIVE MATERIALS FOR ALL-SOLID-STATE RECHARGEABLE BATTERIES, PREPARATION METHODS THEREOF, AND ALL-SOLID-STATE RECHARGEABLE BATTERIES**

(57)    A positive electrode active material for an all-solid-state rechargeable battery, a method of preparing the positive electrode active material, and an all-solid-state rechargeable battery including the positive electrode active material are provided. The positive electrode active material includes secondary particles each including a lithium transition metal-based composite oxide and formed by agglomerating a plurality of primary particles, wherein at least a portion of the primary particles is arranged radially in the secondary particle, a first coating layer on the surface of the secondary particle and containing boron, and a second coating layer on the first coating layer and including $ZrO_2$ and $Li_6Zr_2O_7$.

FIG. 4

**(Cont. next page)**

(52) Cooperative Patent Classification (CPC): (Cont.)
C01P 2004/51; C01P 2004/54; C01P 2004/61;
C01P 2004/62; C01P 2004/64; C01P 2004/80;
C01P 2004/82; C01P 2004/84; C01P 2006/40;
H01M 10/0525; H01M 2004/028; H01M 2300/0068;
H01M 2300/0071

**Description**

**BACKGROUND**

**1. Field**

One or more embodiments of the present disclosure relate to positive electrode active materials for all-solid-state rechargeable batteries, preparation methods thereof, and all-solid-state rechargeable batteries including the positive electrode active material.

**2. Description of the Related Art**

Portable electronic devices (e.g., portable information devices), such as cell phones, laptop computers, smart phones, and/or the like, and/or electric vehicles have used rechargeable lithium batteries having high energy density and easy portability as driving power sources. Recently, research has been intensified to further improve rechargeable lithium batteries with high energy density as driving power sources for hybrid or electric vehicles or as power storage power sources for energy storage systems (ESSs).

To improve the safety, such as fire safety, of rechargeable lithium batteries, all-solid-state rechargeable batteries that utilize solid electrolytes instead of liquid electrolytes have been actively researched and pursued. However, solid electrolytes generally exhibit lower ionic conductivity compared to liquid electrolytes and may present challenges such as high interfacial resistance with the solid particles of the positive electrode active material, degradation of ion conduction due to depletion layer formation from solid-to-solid bonding, and/or other related issues. Thus, there is a need or desire for the development of positive electrode materials that are compatible with solid electrolytes. Furthermore, substantial research is required or desired to improve the overall performance of all-solid-state rechargeable batteries, including enhancements in capacity, charge/discharge efficiency, resistance characteristics, and/or cycle-life performance.

**SUMMARY**

The invention is defined by the appended claims. The description that follows is subjected to this limitation. Any disclosure lying outside the scope of said claims is only intended for illustrative as well as comparative purposes.

One or more aspects of embodiments of the present disclosure are directed toward a positive electrode active material that has low interfacial resistance, high initial charge/discharge capacity and efficiency, and excellent or suitable cycle-life and high-rate capability, a method for preparing the same, and an all-solid-state rechargeable battery including the positive electrode active material. Additional aspects will be set forth in part in the description which follows and, in part, will be apparent from the description, or may be learned by practice of the presented embodiments.

According to one or more embodiments of the present disclosure, a positive electrode active material for an all-solid-state rechargeable battery includes a plurality of secondary particles each including a lithium transition metal-based composite oxide and formed by agglomerating a plurality of primary particles, wherein at least a portion of the primary particles is arranged radially in the secondary particle, a first coating layer arranged on a surface of the secondary particle and containing boron, and a second coating layer arranged on the first coating layer and including $ZrO_2$ and $Li_6Zr_2O_7$.

According to one or more embodiments of the present disclosure, a method of preparing a positive electrode active material for an all-solid-state rechargeable battery includes: (i) mixing a positive electrode active material precursor in a form of secondary particles each including a transition metal-based composite hydroxide and formed by agglomerating a plurality of primary particles, wherein at least a portion of the primary particles is arranged radially in the secondary particle, a lithium raw material, and a boron raw material and performing a first heat treatment at a temperature of 650 °C to 850 °C to obtain a boron-coated preliminary positive electrode active material, (ii) mixing the boron-coated preliminary positive electrode active material and a zirconium raw material and performing a second heat treatment to obtain a positive electrode active material.

According to one or more embodiments of the present disclosure, an all-solid-state rechargeable battery includes a positive electrode including the aforementioned positive electrode active material for the all-solid-state rechargeable battery and a sulfide-based solid electrolyte, a negative electrode, and a solid electrolyte layer between the positive electrode and the negative electrode.

According to one or more embodiments of the present disclosure, the positive electrode active material exhibits low interfacial resistance, high capacity, high initial charge/discharge efficiency, and excellent or suitable cycle-life and high-rate capability. For example, the desired properties of the positive electrode active material are achieved through a multi-step synthesis process. Initially, secondary particles are formed by agglomerating radially arranged primary particles of a transition metal-based composite hydroxide. These secondary particles are then subjected to a first heat treatment in the presence of a lithium source and a boron source, resulting in a boron-containing surface coating that enhances interfacial stability and suppresses side reactions. Subsequently, a second heat treatment is performed with a zirconium source to form a dual-layer coating including $ZrO_2$ and $Li_6Zr_2O_7$. This layered structure improves mechanical integrity and ionic conductivity at the interface with sulfide-based solid electrolytes. The resulting positive electrode active material is incorporated into an all-solid-state rechargeable battery architecture, which includes a sulfide-based solid electrolyte layer positioned between the positive and negative electrodes. This configuration enables efficient lithium-ion transport, reduces interfacial resistance, and supports high-rate charge/discharge performance.

## BRIEF DESCRIPTION OF DRAWINGS

The accompanying drawing is included to provide a further understanding of the present disclosure, and is incorporated in and constitutes a part of this specification. The drawing illustrates example embodiments of the present disclosure and, together with the description, serve to explain principles of present disclosure. The above and other aspects, features, and advantages of certain embodiments of the present disclosure will be more apparent from the following description taken in conjunction with the accompanying drawings.

FIGS. 1A - 1C are each a schematic view showing a shape of a plate-shaped primary particle according to one or more embodiments of the present disclosure.

FIG. 2 is a view for explaining the definition of a radial in a secondary particle according to one or more embodiments of the present disclosure.

FIG. 3 is a schematic view showing a cross-sectional structure of a secondary particle according to one or more embodiments of the present disclosure.

FIG. 4 is a cross-sectional view schematically showing the structure of an all-solid-state rechargeable battery according to one or more embodiments of the present disclosure.

FIG. 5 is a cross-sectional view schematically illustrating the structure of an all-solid-state rechargeable battery including a precipitation-type (kind) negative electrode according to one or more embodiments of the present disclosure.

FIG. 6 is a cross-sectional view schematically illustrating the structure of an all-solid-state rechargeable battery in which two unit cells are stacked according to one or more embodiments of the present disclosure.

FIG. 7 shows the results of measuring the initial charge/discharge capacity and initial efficiency for the all-solid-state rechargeable battery cells manufactured in Example 1 and Comparative Examples 1 to 3 of the present disclosure, where the gray bar represents an initial charge capacity, and the black bar represents an initial discharge capacity.

FIG. 8 shows the results of evaluating the cycle-life characteristics of the all-solid-state rechargeable battery cells of Example 1 and Comparative Examples 1 to 3 of the present disclosure.

FIG. 9 is a scanning electron microscope (SEM) image of a cross-section of the positive electrode active material prepared in Example 1 cut by a focused ion beam (FIB) according to one or more embodiments of the present disclosure.

FIG. 10 is a scanning electron microscope (SEM) image of a cross-section of the positive electrode active material prepared in Comparative Example 3 cut by a focused ion beam (FIB) according to one or more embodiments of the present disclosure.

FIG. 11 is a scanning transmission electron microscope (STEM) image of the surface of the positive electrode active material prepared in Example 1 of the present disclosure.

FIG. 12 is an image showing the distribution of Zr on the surface of the positive electrode active material prepared in Example 1 using energy dispersive X-ray spectroscopy (EDS) according to one or more embodiments of the present disclosure.

## DETAILED DESCRIPTION

Hereinafter, example embodiments will be described in more detail so that those of ordinary skill in the art may easily implement them. However, this disclosure may be embodied in many different forms and is not construed as limited to the example embodiments set forth herein.

The terminology used herein is used to describe embodiments only, and is not intended to limit the present disclosure. As used herein, the singular forms "a," "an," and "the" are intended to include the plural forms as well, unless the context clearly indicates otherwise. Further, the utilization of "may" when describing embodiments of the present disclosure refers to "one or more embodiments of the present disclosure".

As used herein, "combination thereof" refers to a mixture, a laminate, a composite, a copolymer, an alloy, a blend, a reaction product, and/or the like of the constituents.

Here, it should be understood that terms such as "comprise(s)/comprising," "include(s)/including," or "has(have)/having" are intended to designate the presence of an embodied feature, number, step (e.g., act or task) , element, or a combination thereof, but it does not preclude the possibility of the presence or addition of one or more other features, number, step (e.g., act or task) , element, or a combination thereof. Additionally, the terms "comprise(s)/comprising," "include(s)/including," "have/has/having," or other similar terms include or support the terms "consisting of" and "consisting essentially of," indicating the presence of stated features, numbers, steps, operations, elements, and/or components, without or essentially without the presence of other features, numbers, steps, operations, elements, components, and/or groups thereof. Further, the use of "may" when describing embodiments of the present disclosure refers to "one or more embodiments of the present disclosure.

In the drawings, the thickness of layers, films, panels, regions, and/or the like, may be exaggerated or reduced for clarity, and like reference numerals designate like elements throughout the disclosure, and duplicative descriptions thereof may not be provided for conciseness. It will be understood that if an element such as a layer, film, region, or substrate is referred to as being "on" another element, it may be directly on the other element or one or more intervening elements may also be present therebetween. In contrast, if an element is referred to as being "directly on" another element, there are no intervening elements present.

In addition, "layer" as used herein includes not only a shape or layer formed on the whole surface if viewed from a plan view, but also a shape or a layer formed on a partial surface.

In the disclosure, the average particle diameter/size may be measured by a method well suitable to those skilled in the art, for example, by a particle size analyzer, for example, HORIBA, LA-950 laser particle size analyzer, or by using a transmission electron microscope (TEM) image or a scanning electron microscope (SEM) image. In one or more embodiments, it may obtain an average particle diameter value by measuring it using a dynamic light scattering method, performing data analysis, counting the number of particles for each particle size range, and calculating from the data. As used herein, if a definition is not otherwise provided, the average particle diameter/size ($D_{50}$) may refer to a diameter/size of particles having a cumulative volume of 50 volume% in a particle size distribution. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. As used herein, if a definition is not otherwise provided, the average particle diameter/size refers to a diameter of particles having a cumulative volume of 50 volume% in the particle size distribution that is obtained by scanning electron microscope image analysis, for example, measuring the size (diameter or long axis length) of 20 particles at random in a scanning electron microscope image. In the present disclosure, when particles are spherical, "diameter" indicates a particle diameter or an average particle diameter, and when the particles are non-spherical, the "diameter" indicates a major axis length or an average major axis length.

As utilized herein, the term "and/or" includes any and all combinations of one or more of the associated listed items. Expressions such as "at least one of," "one of," and "selected from," when preceding a list of elements, modify the entire list of elements and do not modify the individual elements of the list. For example, "at least one of a, b and c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

As used herein, the term "Metal" is interpreted as a concept including ordinary metals, transition metals, and metalloids (semi-metals). And the term "Group" as utilized herein refers to a group of the Periodic Table of Elements according to the 1 to 18 grouping system of the International Union of Pure and Applied Chemistry ("IUPAC").

"Thickness" may be measured, for example, by means of photographs taken with an electron microscope, such as a scanning electron microscope, or with an optical microscope.

## Positive Electrode Active Material for All-solid-state Rechargeable Battery

According to one or more embodiments of the present disclosure, a positive electrode active material for an all-solid-state rechargeable battery includes secondary particles each including a lithium transition metal-based composite oxide and formed by agglomerating a plurality of primary particles, wherein at least a portion of the primary particles is arranged radially in the secondary particle, a first coating layer arranged (directly) on a surface of the secondary particle and containing boron, and a second coating layer arranged (directly) on the first coating layer and including $ZrO_2$ and $Li_6Zr_2O_7$.

The positive electrode active material has high structural stability, low interfacial resistance with a solid electrolyte, and smooth movement of lithium ions on the surface of positive electrode active material particles, resulting in high initial charge/discharge capacity and initial charge/discharge efficiency, and excellent or suitable high-temperature cycle characteristics and high-rate capability.

The positive electrode active material may be expressed as large particles, and an average particle diameter ($D_{50}$) of the secondary particles may be 8 micrometers ($\mu$m) to 25 $\mu$m, for example, 9 $\mu$m to 25 $\mu$m, 11 $\mu$m to 18 $\mu$m, or 12 $\mu$m to 16 $\mu$m. Here, the average particle diameter ($D_{50}$) may be obtained by randomly selecting 20 particles from a scanning electron microscope image of the positive electrode active material, measuring their particle diameters (diameter, or long axis, or long axis length), then obtaining a particle size distribution, and then taking the size of particles having a cumulative volume of 50 volume% from the particle size distribution as the average particle diameter.

**Core Particle of Positive Electrode Active Material**

The positive electrode active material (in a form of particle) includes a core particle including a lithium transition metal-based composite oxide, a first coating layer (directly) on a surface of the core particle, and a second coating layer (directly) on the first coating layer, wherein the core particle is in a form of a secondary particle in which a plurality of primary particles are agglomerated, and at least a portion of the primary particles within the secondary particle have a radial arrangement structure. These secondary particles may be expressed as radial secondary particles.

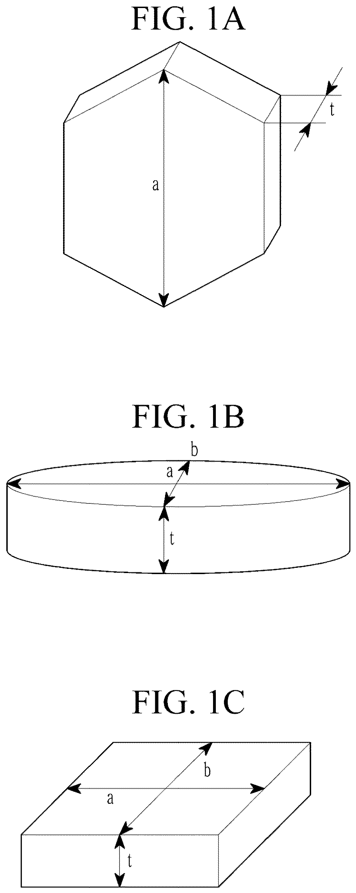

At least a portion of the primary particles may each have a plate shape (e.g., in a form of plate). FIGS. 1A - 1C are each a schematic view showing the plate shape of primary particles forming secondary particles of the positive electrode active material. Referring to FIGS. 1 A - 1C, the primary particles according to one or more embodiments may have one or more suitable detailed shapes while having a basic plate structure, for example, FIG. 1A illustrating a polygonal nanoplate shape (e.g., in a form of nanoplate) such as a hexagon, FIG. 1B illustrating a nanodisk shape, and FIG. 1C illustrating a rectangular parallelepiped shape. In FIGS. 1 A - 1C, "a" refers to a length of a long axis of the primary particle, "b" refers to a length of a short axis, and "t" refers to a thickness. Herein, the length (a) of the long axis may refer to a maximum length based on the widest surface of the primary particle. The thickness (t) may be a maximum length of the surface that is approximately perpendicular to the widest surface of the primary particle, in a direction approximately perpendicular to the widest surface of the primary particle. The direction including the length (a) of the long axis and the direction including the length (b) of the short axis are defined as the plane direction, and the direction in which the thickness (t) is defined is defined as the thickness direction.

The thickness (t) of the primary particle may be smaller than the length (a) of the long axis and the length (b) of the short axis, which are the lengths in the plane direction. Among the lengths in the plane direction, the length (a) of the long axis may be longer or the same as the length (b) of the short axis.

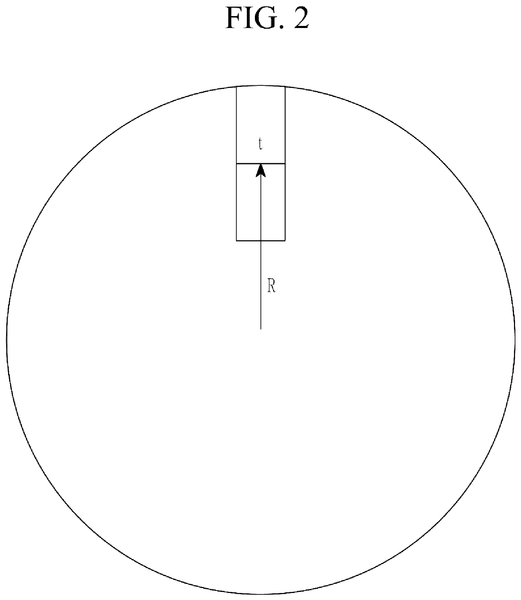

In the positive electrode active material particle (e.g., in the secondary particle), at least a portion of the primary particles has a radial arrangement structure, i.e. the long axes of the primary particles are arranged in a radial direction. FIG. 2 is a view for explaining the definition of a radial in a secondary particle according to one or more embodiments. In one or more embodiments, the radially arranged structure refers to that, as shown in FIG. 2, the thickness (t) direction of the primary particle is perpendicular to or within an angle of $\pm\,5°$ of perpendicular to a direction (R) of the secondary particle from the center to the surface of the secondary particle.

An average length of the primary particles of the secondary particle may be 0.01 $\mu$m to 5 $\mu$m, for example, 0.01 $\mu$m to 2 $\mu$m, 0.01 $\mu$m to 1 $\mu$m, 0.02 $\mu$m to 1 $\mu$m, 0.05 $\mu$m to 0.5 $\mu$m, or 150 nanometers (nm) to 500 nm. Here, "average length" refers to an average length of the long axis length (a) in the plane direction if the primary particles are plate-shaped, and if the primary particle is spherical, it refers to the average particle diameter.

If the primary particles are plate-shaped (e.g., in the form of plates), an average thickness of the primary particles may be, for example, greater than or equal to (e.g., at least) 50 nm, greater than or equal to 100 nm, greater than or equal to 200 nm, greater than or equal to 300 nm, greater than or equal to 400 nm, greater than or equal to 500 nm, greater than or equal to 600 nm, greater than or equal to 700 nm, greater than or equal to 800 nm, or greater than or equal to 900 nm, and for example, less than or equal to (e.g., at most) 5 $\mu$m, less than or equal to 4 $\mu$m, less than or equal to 3 $\mu$m, less than or equal to 2 $\mu$m, less than or equal to 1 $\mu$m, less than or equal to 900 nm, less than or equal to 800 nm, less than or equal to 700 nm, less than or equal to 600 nm, or less than or equal to 500 nm, for example, 100 nm to 200 nm. In addition, in the primary particle, a ratio of the average thickness to the average length may be 1:1 to 1:10, for example, 1:1 to 1:8, 1:1 to 1:6, or 1:2 to 1:5.

Here, the length and the thickness may be measured with a scanning electron microscope, the average length may refer to an arithmetic mean value of 30 pieces of length data, and the average thickness may be an arithmetic mean value of 30 pieces of thickness data.

As described above, if the average length, the average thickness, and the ratio between the average thickness and the average length of the primary particles satisfy the above respective ranges and the primary particles are radially arranged, it may have relatively many lithium diffusion pathways between grain boundaries on the surface of the secondary particle, and a large number of crystal planes capable of lithium transfer are exposed to the outside, so that lithium diffusion is improved and high charge/discharge efficiency and capacity may be secured. Additionally, if the primary particles are arranged radially, the pores exposed on the surface of the secondary particle are directed toward the center of the secondary particle, which may further promote the diffusion of lithium. Due to the radially arranged primary particles, substantially uniform contraction and expansion are possible if lithium is deintercalated and/or intercalated, for example, if lithium is deintercalated, pores exist in the (001) direction, which is the direction in which the particles expand, so that they act as a buffer. In addition, due to the size and arrangement of the primary particles, the probability of cracks occurring during contraction and expansion of the positive electrode active material may be lowered, and the internal pores further alleviate the volume change to reduce the cracks generated in the positive electrode active material during charging and discharging, resulting in improved cycle-life characteristics and reduced resistance increase phenomenon of a rechargeable lithium battery.

The positive electrode active material may have irregular porous pores (irregular porous structure) in at least one of the internal portion and/or external portion of the secondary particle. The irregular porous structure refers to that the structure has primary particles and pores, but the pore size, shape, location, and/or the like are not regular. For example, the secondary particle may have an internal portion having an irregular porous structure and an external portion containing a radially arranged structure as a region around (e.g., surrounding) the internal portion. For example, the primary particles in the internal portion may be arranged without regularity, unlike the primary particles in the external portion. The radially arranged structure refers to that at least a portion of the primary particles are arranged radially.

The term "external portion" may refer to a region within 30 length% to 50 length% from an outermost surface of the secondary particle, for example, within 40 length% from the outermost surface with respect to a total distance from the center to the surface of the secondary particle, or one or more embodiments, may refer to a region within 3 $\mu$m from the outermost surface of the secondary particle. The term "internal portion" may refer to a region within 50 length% to 70 length% from the center of the secondary particle, for example, within 60 length% from the center with respect to a total distance from the center to the surface of the secondary particle, or in one or more embodiments, a region excluding the region within 3 $\mu$m from the outermost surface of the secondary particle.

The secondary particles of the positive electrode active material may each include an external portion arranged in (e.g., having) a radial structure and an internal portion having an irregular porous structure, wherein the internal portion of the secondary particle may include pores with a larger size than in the external portion. For example, in one or more embodiments, in the positive electrode active material (e.g., in the positive electrode active material particle), the pores in the internal portion may have a size of 150 nm to 1 $\mu$m, and the pores in the external portion may have a size of less than 150 nm. In these embodiments, if the internal pore size is larger than the external pore size, there is an advantage in that the lithium diffusion distance within the positive electrode active material is shortened compared to secondary particles having the same internal and external pore sizes, lithium is easily intercalated from the outside to the inside of the positive electrode active material, and there is an effect of alleviating the volume change that occurs during charge and discharge. Here, the pores may have a size which is a diameter, if the pores are spherical or circular, or a length of a long axis if the pores are oval and/or the like, wherein the size may be measured with a scanning electron microscope.

The secondary particles of the positive electrode active material may have open pores on the surface thereof. The open pore size may be less than 150 nm, for example, 10 nm to 148 nm. The open pore is a pore in which some of the walls of the pore are not closed, and is formed by the space between radially arranged plate-shaped primary particles, and is a pore deeply connected from the surface of the secondary particle toward the center of the secondary particle. These open pores are connected to the outside and can become passages through which substances may enter and exit. The open pores may be in the form of opposite to (e.g., facing) the center on the surface of the secondary particle, and may be formed to a depth of less than or equal to 150 nm, for example, 0.001 nm to 100 nm, or 1 nm to 50 nm on average from the surface of the secondary particle. The size and depth of the open pores may be measured by the BJH (Barrett, Joyner and Halenda) method, which is a method derived through the adsorption or desorption content of nitrogen.

The closed pores may exist in the internal portion of the secondary particle, and closed pores and/or open pores may exist in the external portion. The closed pores may exclude or mostly exclude an electrolyte, while the open pores may include an electrolyte therein. The closed pores may be referred to as independent pores that are not connected to other pores because all of the walls of the pores are formed in a closed structure.

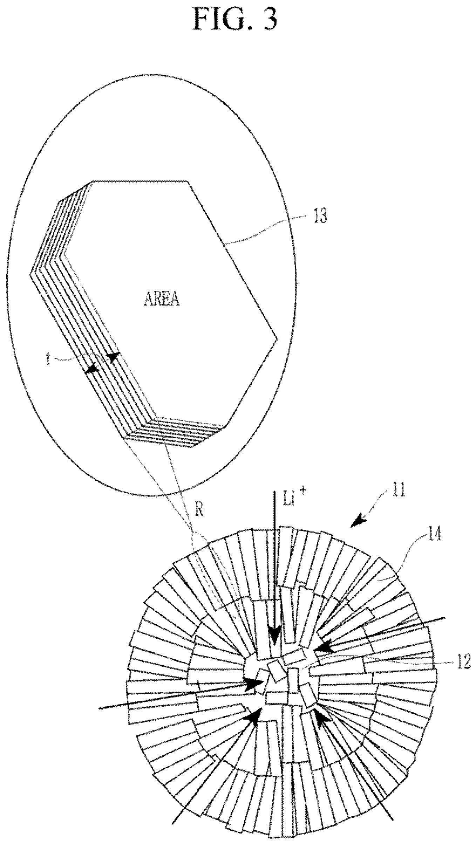

FIG. 3 is a schematic view showing a cross-sectional structure of the secondary particle of the positive electrode active material according to one or more embodiments of the present disclosure. Referring to FIG. 3, the secondary particle 11 of the positive electrode active material according to one or more embodiments has an external portion 14 where plate-shaped primary particles 13 are arranged in a radial direction, and an internal portion 12 where the primary particles 13 are irregularly arranged. The internal portion 12 may have more empty spaces between primary particles than the external portion. Additionally, the pore size and porosity in the internal portion 12 are larger than those in the external portion, and may be irregular. In FIG. 3, the arrows indicate the direction of movement of lithium ions.

The secondary particles each have a porous structure in the internal portion, which has the effect of reducing the diffusion distance of lithium ions to the internal portion, and on the outside of the internal portion (i.e., in the external portion), the primary particles are arranged radially, making it easy for lithium ions to be inserted into the surface. And because the size of the primary particles is small, it is easy to secure a lithium transfer path between the crystal grains. Additionally, the size of the primary particles is small and the pores between the primary particles alleviate the volume change that occurs during charging and discharging, thereby minimizing or reducing the stress caused by the volume change during charging and discharging. These positive electrode active materials may reduce the resistance of rechargeable lithium batteries and improve capacity characteristics and cycle-life characteristics.

In one or more embodiments, in the secondary particle, a plurality of primary particles may have a radial arrangement structure by being arranged toward one center to form surface contact along the thickness direction of the primary particles. In one or more embodiments, the secondary particle may have a multi-center radial arrangement structure with multiple centers. In this regard, if the secondary particle has one-center or multi-center radial arrangement structure, it is easy for lithium to be intercalated/deintercalated to the center portion of the secondary particle.

The secondary particle may include radial primary particles and non-radial primary particles. An amount of the non-radial primary particles may be less than or equal to (e.g., at most) 40 wt%, for example, 0.01 wt% to 30 wt%, or 0.1 wt% to 20 wt%, based on 100 wt% of a total weight of the radial primary particles and non-radial primary particles.

**Lithium Transition Metal-based Composite Oxide**

The positive electrode active material includes a lithium transition metal-based composite oxide capable of reversible intercalation and deintercalation of lithium, and the lithium transition metal-based composite oxide may include a compound represented by any one selected from among the following chemical formulas:

$Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

in the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and $L^1$ is Mn, Al or a combination thereof.

For example, in one or more embodiments, the positive electrode active material may include a lithium cobalt oxide (LCO), a lithium nickel oxide (LNO), a lithium nickel cobalt oxide (NC), a lithium nickel cobalt aluminum oxide (NCA), a lithium nickel cobalt manganese oxide (NCM), a lithium nickel manganese oxide (NM), a lithium manganese oxide (LMO), a lithium iron phosphate compound (LFP), or a combination thereof.

For example, in one or more embodiments, the positive electrode active material may include a lithium nickel-based oxide represented by Chemical Formula 1A, a lithium cobalt-based oxide represented by Chemical Formula 2A, a lithium iron phosphate-based compound represented by Chemical Formula 3A, a cobalt-free lithium nickel-manganese-based oxide represented by Chemical Formula 4A, or a combination thereof.

**Chemical Formula 1A** $\qquad Li_{a1'}Ni_{x1'}M^{1'}_{y1'}M^{2'}_{z1'}O_{2-b1'}X_{b1'}$

In Chemical Formula 1A, $0.9 \leq a1' \leq 1.8$, $0.3 \leq x1' \leq 1$, $0 \leq y1' \leq 0.7$, $0 \leq z1' \leq 0.7$, $0.9 \leq x1'+y1'+z1' \leq 1.1$, and $0 \leq b1' \leq 0.1$, $M^{1'}$ and $M^{2'}$ may each independently be at least one element selected from among aluminum (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), selenium (Se), silicon (Si), tin (Sn), strontium (Sr), titanium (Ti), vanadium (V), tungsten (W), yttrium(Y), zinc (Zn), and zirconium (Zr), and X may be at least one element selected from among fluorine (F), phosphorus (P), and sulfur (S).

In one or more embodiments, in Chemical Formula 1A, $0.6 \leq x1' \leq 1$, $0 \leq y1' \leq 0.4$, and $0 \leq z1' \leq 0.4$; $0.7 < x1' \leq 1$, $0 < y1' \leq 0.3$, and $0 \leq z1' \leq 0.3$; $0.8 \leq x1' \leq 1$, $0 \leq y1' \leq 0.2$, and $0 \leq z1' \leq 0.2$; $0.9 \leq x1' < 1$, $0 < y1' \leq 0.1$, and $0 \leq z1' \leq 0.1$.

**Chemical Formula 2A** $\qquad Li_{a2}CO_{x2}M^3_{y2}O_{2-b2}X_{b2}$

In Chemical Formula 2A, $0.9 \leq a2 \leq 1.8$, $0.7 \leq x2 \leq 1$, $0 \leq y2 \leq 0.3$, $0.9 \leq x2+y2 \leq 1.1$, and $0 \leq b2 \leq 0.1$, $M^3$ may be at least one element selected from among Al, B, Ba, Ca, Ce, Cr, Cu, Fe, Mg, Mn, Mo, Ni, Se, Si, Sn, Sr, Ti, V, W, Y, Zn, and Zr, X may be at least one element selected from among F, P, and S.

**Chemical Formula 3A** $\qquad Li_{a3}Fe_{x3}M^4_{y3}PO_{4-b3}X_{b3}$

In Chemical Formula 3A, $0.9 \leq a3 \leq 1.8$, $0.6 \leq x3 \leq 1$, $0 \leq y3 \leq 0.4$, $0.9 \leq x3+y3 \leq 1.1$, and $0 \leq b3 \leq 0.1$, $M^4$ may be at least one element selected from among Al, B, Ba, Ca, Ce, Co, Cr, Cu, Mg, Mn, Mo, Ni, Se, Si, Sn, Sr, Ti, V, W, Y, Zn, and Zr, and X may be at least one element selected from among F, P, and S.

**Chemical Formula 4A** $\qquad Li_{a4}Ni_{x4}Mn_{y4}M^5_{z4}O_{2-b4}X_{b4}$

In Chemical Formula 4A, $0.9 \leq a4 \leq 1.8$, $0.8 \leq x4 < 1$, $0 < y4 \leq 0.2$, $0 \leq z4 \leq 0.2$, $0.9 \leq x4+y4+z4 \leq 1.1$, and $0 \leq b4 \leq 0.1$, $M^5$ is may be least one element selected from among Al, B, Ba, Ca, Ce, Cr, Cu, Fe, Mg, Mo, Nb, Si, Sn, Sr, Ti, V, W, Y, Se, Zn, and Zr, and X may be at least one element selected from among F, P, and S.

For example, in one or more embodiments, the lithium transition metal-based composite oxide may be a lithium nickel-cobalt composite oxide represented by Chemical Formula 5A.

**Chemical Formula 5A** $Li_{a5}Ni_{x5}Co_{y5}M^6_{z5}O_{2-b5}X_{b5}$

In Chemical Formula 5, $0.9 \leq a5 \leq 1.8$, $0.3 \leq x5 < 1$, $0 < y5 \leq 0.7$, $0 \leq z5 \leq 0.7$, $0.9 \leq x5+y5+z5 \leq 1.1$, and $0 \leq b5 \leq 0.1$, $M^6$ may be at least one element selected from among Al, B, Ba, Ca, Ce, Cr, Cu, Fe, Mg, Mn, Mo, Nb, Si, Sn, Sr, Ti, V, W, Y, Se, Zn, and Zr, and X may be at least one element selected from among F, P, and S.

For example, in one or more embodiments, the lithium transition metal-based composite oxide may be a lithium nickel-cobalt-manganese-based composite oxide, a lithium nickel-cobalt-aluminum-based composite oxide, or a lithium nickel-cobalt-aluminum-manganese-based composite oxide represented by Chemical Formula 6A.

**Chemical Formula 6A** $Li_{a6}Ni_{x6}Co_{y6}M^7_{z6}M^8_{w6}O_{2-b6}X_{b6}$

In Chemical Formula 6A, $0.9 \leq a6 \leq 1.8$, $0.3 \leq x6 \leq 0.98$, $0.01 \leq y6 \leq 0.69$, $0.01 \leq z6 \leq 0.69$, $0 \leq w6 \leq 0.69$, $0.9 \leq x6+y6+z6+w6 \leq 1.1$, and $0 \leq b6 \leq 0.1$, $M^7$ is at least one element selected from among Al and Mn, $M^8$ may be at least one element selected from among B, Ba, Ca, Ce, Cr, Cu, Fe, Mg, Mo, Nb, Si, Sn, Sr, Ti, V, W, Mn, Y, Se, Zn, and Zr, and X may be at least one element selected from among F, P, and S.

For example, in one or more embodiments, the transition metal-based composite oxide may be a lithium nickel-cobalt-aluminum-based composite oxide, which refers to an oxide containing lithium, nickel, cobalt, and aluminum, and optionally further containing other elements, and may be expressed as Ni-Co-Al, or NCA.

The lithium nickel-cobalt-aluminum-based composite oxide may be represented by Chemical Formula 1.

**Chemical Formula 1** $Li_{a1}Ni_{x1}Co_{y1}Al_{z1}M^1_{w1}O_{2-b1}X_{b1}$

In Chemical Formula 1, $0.9 \leq a1 \leq 1.2$, $0.7 \leq x1 < 1$, $0 < y1 < 0.3$, $0 < z1 < 0.3$, $0 \leq w1 < 0.3$, $0.9 \leq x1+y1+z1+w1 \leq 1.1$, and $0 \leq b1 \leq 0.1$, $M^1$ may be at least one element selected from among B, Ba, Ca, Ce, Cr, Cu, Fe, Mg, Mo, Nb, Si, Sn, Sr, Ti, V, W, Y, Mn, Se, Zn, and Zr, and X may be at least one element selected from among F, P, and S.

In Chemical Formula 1, for example $0.7 \leq x1 \leq 0.98$, $0.01 \leq y1 \leq 0.29$, $0.01 \leq z1 \leq 0.29$, and $0 \leq w1 \leq 0.28$; $0.8 \leq x1 \leq 0.98$, $0.01 \leq y1 \leq 0.19$, $0.01 \leq z1 \leq 0.19$, and $0 \leq w1 \leq 0.18$; or $0.9 \leq x1 \leq 0.98$, $0.01 \leq y1 \leq 0.09$, $0.01 \leq z1 \leq 0.09$, and $0 \leq w1 \leq 0.08$.

For example, in one or more embodiments, the lithium transition metal-based composite oxide may be a lithium nickel composite oxide, and the nickel content of the lithium nickel-based composite oxide may be greater than or equal to (e.g., may be at least) 30 mol%, for example, greater than or equal to 40 mol%, greater than or equal to 50 mol%, greater than or equal to 60 mol%, greater than or equal to 70 mol%, greater than or equal to 80 mol%, or greater than or equal to 90 mol% and less than or equal to 99.9 mol%, or less than or equal to 99 mol% based on 100 mol% of a total metal excluding lithium in the lithium nickel-based composite oxide.

Generally, as the nickel content in the positive electrode active material is increased, cation mixing, in which $Ni^{2+}$ ions take lithium sites, also increases; as a result, capacity rather decreases, or because diffusion of lithium ions is hindered by impurities such as NiO and/or the like, a battery cycle-life may be deteriorated, and in addition, the positive electrode active material may have a side reaction with an electrolyte due to the structural collapse and cracks according to charges and discharges, which may decrease the battery cycle-life and bring a safety problem. In order to solve these problems, if boron is coated only on the surface of a positive electrode active material particle in a conventional method, the boron acts as resistance and rather decreases capacity and deteriorates a cycle-life. In contrast, the positive electrode active material prepared according to one or more embodiments of the present disclosure alleviates problems associated with high nickel concentration by coating an appropriate or suitable amount of boron on the positive electrode active material particles and forming a second coating layer thereon, which will be described later, even if a high nickel-based active material is used, thereby realizing high capacity while improving cycle-life characteristics without deteriorating initial discharge capacity.

**First Coating Layer of Positive Electrode Active Material**

The positive electrode active material includes a boron-containing first coating layer. The first coating layer may be expressed as a type (kind) of buffer layer, and may play a role in effectively suppressing or reducing side reactions between the lithium transition metal-based composite oxide and a sulfide-based solid electrolyte.

In the art, if boron is coated on a positive electrode active material, it is common to use a method of mixing a boron raw material into a lithium transition metal-based composite oxide in a wet or dry manner and then heat treating it. However, in this method, there is a problem that boron acted as resistance on the surface of the positive electrode active material, which rather worsened the capacity and cycle-life of positive electrode active material. In contrast, according to one or more embodiments, the positive electrode active material coated with a boron-containing compound may be obtained by a method such as mixing a nickel-based composite hydroxide in which primary particles are arranged radially and a lithium raw material and adding a boron raw material together to perform a first heat treatment. In this way, a lithium nickel-based composite oxide in which primary particles are arranged radially is obtained, and at the same time, an appropriate or suitable amount of boron is stably coated on the surface of the positive electrode active material (positive electrode active material particles), so that boron no longer acts as a resistor, the structural stability of the positive electrode active material is secured, and problems due to contact between the positive electrode active material and the electrolyte are suppressed or reduced, so that the capacity characteristics and long-term cycle-life characteristics of the battery may be improved.

For example, nickel-based positive electrode active materials may experience structural collapse and cation mixing phenomenon due to the formation of NiO and other substances on the surface as a result of repeated charge/discharge cycles, which may cause gas generation and/or deterioration of cycle-life characteristics. In addition, because the positive electrode active material may be cracked due to the repeated charges and discharges, increasing side reactions of the positive electrode active material with an electrolyte solution and thus reducing battery capacity and deteriorating cycle-life characteristics. However, according to one or more embodiments of the present disclosure, an appropriate or suitable amount of a boron-containing compound is stably coated on the positive electrode active material, and a first coating layer and a grain boundary boron coating portion and/or a boron doping layer are concurrently (e.g., simultaneously) formed on the positive electrode active material (e.g., on the positive electrode active material particles), so that the detachment of oxygen atoms from the surface of the positive electrode active material is prevented or reduced, structural collapse is suppressed or reduced, and the phenomenon of breakage due to repeated charge and discharge is suppressed or reduced. Furthermore, the movement of lithium ions in an all-solid-state battery can be made smoother by the boron-containing compound present on the surface of the positive electrode active material, thereby improving rate capability.

For example, in one or more embodiments, the first coating layer may contain a boron-containing compound, and may include, for example, boron oxide, lithium boron oxide (lithium borate), or a combination thereof, and may include, for example, $B_2O_2$, $B_2O_3$, $B_4O_3$, $B_4O_5$, $LiBO_2$, $Li_3B_7O_{12}$, $Li_6B_4O_9$, $Li_3B_{11}O_{18}$, $Li_2B_4O_7$, $Li_3BO_3$, or a combination thereof.

For example, in one or more embodiments, the first coating layer may exist in the form of a continuous (e.g., substantially continuous) film on the surface of the secondary particle of the positive electrode active material or may be coated in the form of an island. In the present context and unless defined otherwise, an "island" refers to a structure (e.g., a layer) that is isolated, distinct, and not continuous, resembling an island. This structure is surrounded by a different material or space, making it stand out as a separate entity. For example, the first coating layer may be arranged in such a way that it is discrete and isolated one part from another part.

In one or more embodiments, a boron content in the positive electrode active material may be 0.01 mol% to 0.5 mol%, for example, 0.01 mol% to 0.4 mol%, 0.01 mol% to 0.3 mol%, or 0.1 mol% to 0.3 mol%. In this regard, the boron content in the positive electrode active material may be measured as the mol% of boron based on 100 mol% of a total mole of a total metal excluding lithium in the positive electrode active material. Additionally, the boron content in the positive electrode active material may be 0.01 wt% to 0.5 wt%, for example, 0.01 wt% to 0.3 wt%, 0.01 wt% to 0.2 wt%, or 0.01 wt% to 0.1 wt%. Similarly, the boron content in the positive electrode active material may be measured as the wt% content of boron based on 100 wt% of a total weight of the total metal excluding lithium in the positive electrode active material. The boron content may be measured, for example, through ICP (Inductively Coupled Plasma) emission spectrometry. When boron is coated with such a content, it does not act as a resistance and the battery capacity does not decrease, the diffusion of lithium ions into the positive electrode active material becomes easier, and the initial charge/discharge efficiency is improved, and problems caused by repeated charge and discharge are suppressed or reduced, thereby improving long cycle-life characteristics of the battery.

**Grain Boundary Boron Coating Portion**

In one or more embodiments, the positive electrode active material in the form of secondary particles each having a radial structure may further include a grain boundary boron coating portion on the surface of primary particles constituting the secondary particle, as well as the first coating layer on the surface of the secondary particles. For example, in the positive electrode active material, boron may be coated along the interface of the primary particles in the internal portion of the secondary particle. Here, the internal portion of the secondary particle refers to the entire inside excluding the surface, and for example, it may refer to the entire inside from a depth of approximately 1 μm from the outer surface of the secondary particle, and may also be expressed as a portion that is not in contact with distilled water when washing the secondary particles of the positive electrode active material with distilled water. In this way, when a boron-containing compound is coated on the surface of the secondary particles and the internal grain boundary surface of the positive electrode active material (i.e., the positive electrode active material particle), boron does not act as resistance, and the phenomenon of structural collapse or breakage of the positive electrode active material due to charge and discharge may be effectively suppressed or reduced.

For example, in one or more embodiments, the boron content present on the surface of the secondary particle may be higher than the boron content present at the internal grain boundary of the secondary particle, for example, four times or more. For example, the weight of boron in the first coating layer may be at least four times the weight of boron in the grain boundary boron coating portion. For example, a ratio of the weight of boron in the first coating layer to the weight of boron in the grain boundary boron coating portion may be 70:30 to 98:2, for example 75:25 to 97:3, or 80:20 to 95:5. In this way, boron may play a role in improving performance without acting as a resistor in the positive electrode active material, and may concurrently (e.g., simultaneously) improve the capacity characteristics and cycle-life characteristics of rechargeable lithium batteries.

For example, the boron content in the first coating layer may be 0.01 wt% to 0.5 wt%, 0.02 wt% to 0.5 wt%, 0.03 wt% to 0.4 wt%, 0.04 wt% to 0.3 wt%, or 0.05 wt% to 0.25 wt%, based on 100 wt% of a total weight of the total metal excluding lithium in the positive electrode active material. For example, the boron content in the grain boundary boron coating portion may be 0.001 wt% to 0.05 wt%, 0.001 wt% to 0.04 wt%, 0.002 wt% to 0.03 wt%, or 0.003 wt% to 0.02 wt%, based on 100 wt% of the total weight of the total metal excluding lithium in the positive electrode active material, but embodiments of the present disclosure are not limited thereto. In one or more embodiments, if the boron content in the first coating layer and the grain boundary boron coating portion is within the above range, both (e.g., simultaneously) the capacity characteristics and cycle-life characteristics of the rechargeable lithium battery can be improved. Here, the boron content may be measured through ICP emission spectroscopy analysis of the positive electrode active material, the boron content in the grain boundary boron coating portion may refer to the boron content remaining in the positive electrode active material after washing, and the boron content of the first coating layer may refer to a difference between the boron content before washing and the boron content after washing.

**Boron Doping Layer**

According to one or more embodiments, the positive electrode active material in the form of secondary particles each having a radial structure may further include a boron doping layer located inside the primary particle exposed on the surface of the secondary particle and present in the form of a layer along a surface perimeter of the secondary particle. The boron doping layer may be arranged in the secondary particle, and may be arranged within a depth range of 10 nm from outer surfaces of the primary particles exposed to the surface of the secondary particle. When the outer surface of the primary particles exposed to the surface of the secondary particle is 0 nm, the doping layer may be present within a depth range of 0 nm to 10 nm from the surface of the secondary particle. For example, the boron doping layer may be also said to be located within a depth range of 10 nm from the surface of the secondary particle. When the surface of the secondary particle is 0 nm deep, the doping layer may be present within a depth range of 0 nm to 10 nm from the surface. Such a boron doping layer may further improve a structural stability of the positive electrode active material, and thus may improve cycle-life characteristics of a rechargeable lithium battery.

The boron doping layer may be arranged, for example, within a depth range of 9 nm, within a depth range of 8 nm, within a depth range of 7 nm, within a depth range of 6 nm, within a depth range of 5 nm, within a depth range of 4 nm, within a depth range of 3 nm, or within a depth range of 2.5 nm from the outer surface of the primary particles exposed to the surface of the secondary particle. This boron doping layer is distinct from the first coating layer or the grain boundary boron coating portion, and is thought to contribute to the structural stability of the positive electrode active material.

The boron doping layer refers to that it is provided in the form of a layer along the surface perimeter of the secondary particle, and is distinguished from boron being evenly doped within the primary particle and also from being coated on the surface of the secondary particle. A thickness of the boron doping layer may be less than or equal to (e.g., at most) 10 nm, for example, 1 nm to 10 nm, or 2 nm to 8 nm.

**Second Coating Layer of Positive Electrode Active Material**

The positive electrode active material includes a zirconium-containing second coating layer, and the zirconium-containing second coating layer may be expressed as a type (kind) of buffer layer, and may effectively suppress or reduce side reactions between a lithium transition metal-based composite oxide and a sulfide-based solid electrolyte.

The second coating layer according to one or more embodiments may be formed through a dry coating method. This second coating layer may include a mixed phase of $ZrO_2$ and $Li_6Zr_2O_7$. For example, the second coating layer includes $ZrO_2$ having a relatively high crystallinity and $Li_6Zr_2O_7$ having a lower crystallinity. The presence or absence of $ZrO_2$ and $Li_6Zr_2O_7$ may be identified, for example, through the Inverse Fast Fourier Transform (FFT) or FFT rotation pattern of the High-Resolution Transmission Electron Microscopy (HRTEM) image for the positive electrode active material. The second coating layer including $ZrO_2$ and $Li_6Zr_2O_7$ may facilitate the movement of lithium ions on the surface of the positive electrode active material, improve the structural stability of the positive electrode active material, and lower the reactivity with a sulfide-based solid electrolyte to improve the interfacial resistance.

In one or more embodiments, the second coating layer may further include an amorphous phase. For example, the second coating layer may include a ZrO$_2$ crystal phase, a Li$_6$Zr$_2$O$_7$ crystal phase, and a Zr-containing amorphous phase. Such a second coating layer may improve lithium ionic conductivity and reduce the interfacial resistance between the positive electrode active material and the solid electrolyte while having a thin and substantially uniform thickness.

For example, in one or more embodiments, the second coating layer may be in the form of a continuous (e.g., substantially continuous) film or in the form of an island. The second coating layer may be prepared by a dry coating method which will be described later, and even then, the coating can be well formed with a substantially uniform thickness on the surface of the positive electrode active material without being agglomerated or existing locally. For example, the second coating layer may exist in the form of a continuous (e.g., substantially continuous) and substantially uniform film on the surface of the secondary particle. In this way, the capacity characteristics and cycle-life characteristics of the positive electrode active material may be further improved.

For example, a thickness of the second coating layer may be 5 nm to 300 nm, for example, 5 nm to 200 nm, 5 nm to 100 nm, 5 nm to 80 nm, or 10 nm to 50 nm. Because the second coating layer has the above thickness range, it may improve the electrochemical characteristics of the battery by suppressing or reducing the increase in resistance due to the coating and effectively protecting the positive electrode active material while improving ionic conductivity.

According to one or more embodiments, the second coating layer may be formed with a substantially uniform thickness without being locally present or agglomerated on the surface of the secondary particle of the positive electrode active material. For example, a variation in the thickness of the second coating layer may be less than or equal to 20%, less than or equal to 10%, or less than or equal to 5% relative to the diameter of the positive electrode active material particle, and may be less than or equal to 100 nm, less than or equal to 50 nm, or less than or equal to 30 nm. Here, the variation in the thickness of the second coating layer refers to a thickness of the second coating layer within one positive electrode active material particle. For example, the deviation of the second coating layer thickness may be calculated by measuring the thickness of 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the second coating layer thickness satisfies the above range refers to that a coating layer of substantially uniform thickness is formed in a good or suitable form on the surface of the positive electrode active material particle. Accordingly, structural stability of the positive electrode active material is improved, side reactions with the solid electrolyte are effectively suppressed or reduced, and the increase in resistance or decrease in capacity due to coating may be minimized or reduced.

In one or more embodiments, a Zr content of the second coating layer of the positive electrode active material may be 0.1 parts by mole to 0.6 parts by mole, for example, 0.1 parts by mole to 0.5 parts by mole, or 0.1 parts by mole to 0.4 parts by mole based on 100 parts by moles of a total metal excluding lithium in the lithium transition metal-based composite oxide of the positive electrode active material.

For example, in one or more embodiments, a total Zr content of the second coating layer of the positive electrode active material may be 0.1 wt% to 6 wt%, for example, 0.5 wt% to 6 wt%, or 1 wt% to 5.5 wt%, based on 100 wt% of a total weight of the positive electrode active material.

For example, in one or more embodiments, a total Zr content of the second coating layer of the positive electrode active material may be 0.1 at% (atomic percentage) to 10 at%, for example, 0.1 at% to 8 at%, 0.1 at% to 7 at%, 0.5 at% to 6.5 at%, or 1 at% to 6 at% based on 100 at% of a total metal excluding lithium in the positive electrode active material.

If the total Zr content of the second coating layer satisfies the above ranges, the zirconium-containing coating layer may sufficiently play a role in protecting the positive electrode active material, without acting as a resistor, and may exist well with a substantially uniform thickness without being agglomerated or locally present on the surface of positive electrode active material particles, thereby effectively improving cycle-life characteristics without reducing the capacity of the positive electrode active material. For example, if the Zr content is excessive, the coating layer may become thicker and act as a resistance layer, which may reduce the charge/discharge capacity of the battery. In contrast, if the Zr content is too small, the buffer function may not be sufficiently performed, which may reduce cycle-life characteristics of the positive electrode active material.

## Method for Preparing Positive Electrode Active Material for All-solid-state Rechargeable Battery

Further, a method of preparing a positive electrode active material for an all-solid-state rechargeable battery is provided. The method includes: (i) mixing a positive electrode active material precursor in a form of secondary particles each including a transition metal-based composite hydroxide and formed by agglomerating a plurality of primary particles, wherein at least a portion of the primary particles is arranged radially in each secondary particle, a lithium raw material, and a boron raw material and performing a first heat treatment at a temperature of 650 °C to 850 °C to obtain a boron-coated preliminary positive electrode active material, (ii) mixing the boron-coated preliminary positive electrode active material and a zirconium raw material and performing a second heat treatment to obtain a positive electrode active material. The positive electrode active material for an all-solid-state rechargeable battery may be prepared through the above-described preparing method.

In step (e.g., act or task) (i), the transition metal-based composite hydroxide and the lithium raw material react through a first heat treatment process to form secondary particles including a lithium transition metal-based composite oxide, and a boron-containing compound is coated on the surface and internal grain boundaries of the secondary particle to prepare a first preliminary positive electrode active material. For example, the first preliminary positive electrode active material having a first coating layer formed through step (e.g., act or task) (i) may be prepared.

In the art, if coating boron on a positive electrode active material is performed, a method has been generally used in which a lithium raw material is mixed into a nickel-based composite hydroxide, heat-treated to prepare a lithium nickel-based composite oxide, and then a boron raw material is mixed into the lithium nickel-based composite oxide in a wet manner or a dry manner and heat-treated again. However, in this case, there is a problem that the boron attached to the surface of the positive electrode active material acted as resistance, thereby reducing the capacity and cycle-life of the prepared positive electrode active material. In contrast, the positive electrode active material prepared according to one or more embodiments of the present disclosure has a high pellet density and a high initial discharge capacity, so that the capacity per volume of the battery is significantly increased, the initial charge/discharge efficiency is high, and the room temperature and high temperature cycle-life characteristics may be improved.

In the preparation method of one or more embodiments, the transition metal-based composite hydroxide, which is a positive electrode active material precursor, may be formed by agglomeration of a plurality of primary particles, and at least a portion of the primary particles may be arranged radially in the form of secondary particle. An average particle diameter of the secondary particles may be 8 μm to 25 μm, for example, 10 μm to 25 μm, 11 μm to 20 μm, or 12 μm to 18 μm. Here, the average particle diameter of the secondary particles may be obtained by selecting 20 particles at random in an SEM image of the positive electrode active material precursor, measuring particle diameters (diameter, long axis, or length of the long axis) to obtain a particle size distribution, and taking the diameter ($D_{50}$) of particles with a cumulative volume of 50 volume% from the particle size distribution as the average particle diameter.

The positive electrode active material precursor may be prepared through a co-precipitation reaction. For example, a composite metal raw material is prepared by mixing metal raw materials such as nickel raw materials, and a complexing agent and a pH controlling agent are added thereto to proceed with the co-precipitation reaction while controlling the pH of the mixture to produce a nickel-based composite hydroxide of the desired or suitable composition. The complexing agent plays a role in controlling the reaction rate of precipitate formation in the co-precipitation reaction, and may be, for example, ammonium hydroxide ($NH_4OH$) or citric acid. The pH controlling agent may be, for example, sodium hydroxide (NaOH), sodium carbonate ($Na_2CO_3$), sodium oxalate ($Na_2C_2O_4$), and/or the like. The pH of the mixture may be, for example, adjusted to be in a range from 10 to 13.

The co-precipitation reaction may proceed in several steps, for example, in 2 steps, 3 steps, or 4 steps. At each step (e.g., act or task), the concentration of the complexing agent, the input rates of the metal raw materials, the pH control range, reaction temperature, reaction time, or stirring power may be adjusted differently. Through this adjustment, it may prepare a positive electrode active material precursor in the form of secondary particles in each of which at least a portion of the primary particles are radially arranged, and also to prepare secondary particles with different internal and external shapes.

For example, the positive electrode active material precursor having a radial structure may be, for example, manufactured by the following method. The method of preparing the positive electrode active material precursor may include a first process, a second process, and a third process for forming a core, an intermediate layer, and a shell in that order. In the first process, the complexing agent, pH controlling agent, and metal raw materials are added to a reactor and reacted. At this time, the concentration of the complexing agent may be 0.1 *M* to 0.7 *M* and the input amount may be 6 mL/min to 12 mL/min. The concentrations of the metal raw materials may be 0.1 *M* to 3.5 *M* and the input amounts thereof may be 50 mL/min to 100 mL/min. Subsequently, in the second process, the complexing agent, pH controlling agent, and metal raw materials are further added. At this time, the concentration of the complexing agent may be 0.3 *M* to 1.0 *M* and the input amount thereof may be 8 mL/min to 15 mL/min. The concentrations of the metal raw materials may be 0.1 *M* to 3.5 *M* and the input amounts thereof may be 60 mL/min to 120 mL/min. Then, in the third process, the concentrations and input amounts of the complexing agent and metal raw material are further increased or kept the same, so that the particle growth rate does not decrease. At this time, the concentration of the complexing agent may be 0.35 *M* to 1.0 *M* and the input amount thereof may be 12 mL/min to 20 mL/min. The concentration of the metal raw materials may be 0.1 *M* to 2.5 *M* and the input amounts thereof may be 70 mL/min to 150 mL/min. In the first to third processes, pH may be adjusted between 10 and 12.

The transition metal-based composite hydroxide may be a nickel-based composite hydroxide, and the nickel-based composite hydroxide may be represented by, for example, Chemical Formula 11.

**Chemical Formula 11** $\quad$ $Ni_{x11}M^{11}{}_{y11}M^{12}{}_{z11}(OH)_2$

In Chemical Formula 11, $0.3 \le x11 \le 1$, $0 \le y11 \le 0.7$, $0 \le z11 \le 0.7$, $0.9 \le x11 + y11 + z11 \le 1.1$, and $M^{11}$ and $M^{12}$ may

each independently be at least one element selected from among Al, B, Ba, Ca, Ce, Co, Cr, Cu, Fe, Mg, Mn, Mo, Nb, Si, Sn, Sr, Ti, V, W, Y, Se, Zn, and Zr.

In one or more embodiments, the nickel-based composite hydroxide may be a nickel-cobalt-aluminum-based hydroxide represented by Chemical Formula 12.

**Chemical Formula 12** $\quad$ $Ni_{x12}Co_{y12}Al_{z12}M^{13}{}_{w12}(OH)_2$

In Chemical Formula 12, $0.7 \leq x12 < 1$, $0 < y12 < 0.3$, $0 < z12 < 0.3$, $0 \leq w12 < 0.3$, $0.9 \leq x12+y12+z12+w12 \leq 1.1$, and $M^{13}$ may be at least one element selected from among B, Ba, Ca, Ce, Cr, Cu, Fe, Mg, Mn, Mo, Nb, Si, Sn, Sr, Ti, V, W, Y, Se, Zn, and Zr.

In the nickel-based composite hydroxide, at least a portion of the primary particles may have a plate shape (e.g., in a form of plates). In this way, the secondary particles may have a radial arrangement structure in which the long axes of the plate primary particles are directed toward the surface of the secondary particle.

The lithium raw material may be, for example, $Li_2CO_3$, LiOH, LiF, a hydrate or an anhydrate thereof, or a combination thereof. Additionally, the lithium raw material may be mixed so that a molar ratio of lithium to a total metal in the first nickel-based composite hydroxide (i.e., the transition metal-based composite hydroxide) may be 0.8 to 1, 0.8 to 0.995, 0.9 to 0.995, or 0.950 to 0.995. By adjusting the molar ratio of lithium within the above range, the first preliminary positive electrode active material in which a first coating layer is effectively formed may be obtained.

The boron raw material is a boron-containing compound, and may include, for example, $H_3BO_3$, $HBO_2$, $B_2O_3$, $C_6H_5B(OH)_2$, $(C_6H_5O)_3B$, $[CH_3(CH_2)_3O]_3B$, $(C_3H_7O)_3B$, $C_3H_9B_3O_6$, $C_{13}H_{19}BO_3$, or a combination thereof.

The boron raw material may be mixed so that a boron content is 0.01 parts by mole to 0.5 parts by mole, for example, 0.01 parts by mole to 0.3 parts by mole, or 0.1 parts by mole to 0.3 parts by mole, based on 100 parts by moles of the total amount of metal excluding lithium (e.g., an amount of a total metal excluding lithium) in the transition metal-based composite hydroxide. When the amount of the boron raw material satisfies the above range, boron in the positive electrode active material may play a role in improving the performance of the rechargeable lithium battery without acting as a resistor, and accordingly, the capacity may be improved, and cycle-life characteristics may be improved. If the amount of the boron raw material becomes excessive, boron may act as resistance in the positive electrode active material, reducing the capacity and cycle-life of the battery.

The first heat treatment may be performed at a temperature of 650 °C to 850 °C, for example, may be performed at a temperature of, for example, 690 °C to 780 °C. Additionally, the first heat treatment may be performed for 5 hours to 25 hours, for example, for 5 hours to 20 hours. In this way, a preliminary positive electrode active material stably coated with a boron-containing compound may be obtained, through which a positive electrode active material with high capacity and high energy density may be prepared. In a conventional coating method of mixing a lithium nickel-based composite oxide and a boron raw material and performing heat treatment, it is common to perform heat treatment at a much lower temperature, for example, below 600 °C, but in one or more embodiments of the present disclosure, the heat treatment is performed at a higher temperature, for example, 650 °C to 850 °C, which is different from the conventional method. By heat-treating in this temperature range, a lithium nickel-based composite oxide in the form of secondary particles each having a radial structure is obtained while concurrently (e.g., simultaneously) coating it with a boron-containing compound, and thus the prepared preliminary positive electrode active material may concurrently (e.g., simultaneously) improve the initial discharge capacity, initial efficiency, and cycle-life characteristics without the resistance-increasing effect due to boron, and may improve capacity per volume of the battery by increasing the pellet density.

In one or more embodiments, the first heat treatment may include a temperature increase step (e.g., act or task) and a temperature maintenance step (e.g., act or task), and a temperature increase time may be set to be longer than a temperature maintenance time. For example, the temperature increase time may be 6 hours to 16 hours and the temperature maintenance time may be 1 hour to 9 hours, and the temperature increase time may be longer than the temperature maintenance time.

In the first heat treatment, the temperature increase time may be, for example, 6 hours to 15 hours, 6 hours to 14 hours, 6 hours to 13 hours, or 7 hours to 12 hours, and the temperature maintenance time may be 2 hours to 9 hours, or 3 to 8 hours.

Additionally, a ratio of (temperature increase time):(temperature maintenance time) may be 1.1:1 to 10:1, for example, 1.1:1 to 8:1, 1.1:1 to 6:1, 1.1:1 to 5:1, or 1.1:1 to 4:1.

By controlling the first heat treatment profile in this way, a high-efficiency radial secondary particle-shaped positive electrode active material may be effectively prepared, and an appropriate or suitable amount of boron-containing compound may be stably coated on the positive electrode active material.

In one or more embodiments, in step (e.g., act or task) (ii), provided is a method of forming a second coating layer by dry mixing the boron-coated preliminary positive electrode active material and the zirconium raw material and performing a second heat treatment. The method applies a dry coating method, does not use any organic solvents or expensive coating raw materials, and may use existing equipment, making it economical and environmentally friendly, and making mass production feasible.

According to the preparing method, a positive electrode active material may be synthesized in which a second coating layer including $ZrO_2$ and $Li_6Zr_2O_7$ is formed on the first coating layer, and the second coating layer having an appropriate or suitable amount and thickness may be synthesized in a good or suitable form, thereby preparing the positive electrode active material having improved capacity characteristics and cycle-life characteristics.

For example, these positive electrode active materials have low reactivity with sulfide-based solid electrolytes and low interfacial resistance, so they may be applied to all-solid-state rechargeable batteries to improve capacity characteristics, rate capability, and cycle-life characteristics.

The zirconium raw material is a compound containing the zirconium element, and any compound capable of dry mixing may be applied without limitation. The zirconium raw material may be, for example, a zirconium-containing oxide, a zirconium-containing sulfide, a zirconium-containing carbonate, a zirconium-containing hydroxide, and/or the like, and may be, for example, zirconium oxide, zirconium sulfide, zirconium carbonate, zirconium hydroxide, or a combination thereof.

The zirconium raw material may be mixed in an amount of 0.1 parts by mole to 0.6 parts by mole, for example, 0.1 parts by mole to 0.5 parts by mole, or 0.1 parts by mole to 0.4 parts by mole, based on 100 parts by moles of a total metal excluding lithium in the preliminary positive electrode active material. When the zirconium raw material is input within the above range, the second coating layer having an appropriate or suitable amount and thickness may be formed, which may sufficiently perform the role of protecting the positive electrode active material, and may exist with a substantially uniform thickness without being agglomerated or locally present on the surface of the secondary particles. For example, if the amount of the zirconium raw material is excessive, the second coating layer may become thicker and act as a resistance layer, which may reduce the charge/discharge capacity of the positive electrode active material. On the other hand, if the amount of the zirconium raw material is too small, it may not sufficiently perform the buffer function, which may reduce cycle-life characteristics of the positive electrode active material.

In one or more embodiments, the zirconium raw material may be in a form of particles. For example, in one or more embodiments, the zirconium raw material is in the form of nanoparticles, and an average particle diameter ($D_{50}$) of the particles may be, for example, 10 nm to 500 nm, 10 nm to 400 nm, or 50 nm to 300 nm. For example, in one or more embodiments, the zirconium raw material is particles including zirconium oxide, and the average particle diameter ($D_{50}$) of the particles may be 10 nm to 500 nm, 10 nm to 400 nm, or 50 nm to 300 nm. The use of nanoparticles allows for enhanced surface area and reactivity, which are beneficial for forming a uniform and conformal coating layer. In this way, it may be advantageous to synthesize a coating layer of appropriate or suitable thickness. The nanoscale size of the zirconium particles promotes intimate contact with the boron-coated surface of the preliminary active material, thereby facilitating the formation of a mixed phase of $ZrO_2$ and $Li_6Zr_2O_7$ during heat treatment and contributing to improved ionic conductivity and mechanical stability of the coating.

In one or more embodiments, dry mixing refers to mixing without a solvent and may be understood as a solid-phase coating method. This is distinguished from wet coating or liquid coating, and by utilizing the dry coating, the second coating layer including a mixed phase of $ZrO_2$ and $Li_6Zr_2O_7$ may be easily formed. In step (e.g., act or task) (ii), the second coating layer including the mixed phase of $ZrO_2$ and $Li_6Zr_2O_7$ and having a substantially uniform thickness may be formed by performing a second heat treatment after dry mixing. The second heat treatment temperature may be 420 °C to 580 °C, for example, 430 °C to 570 °C, 440 °C to 560 °C, 450 °C to 550 °C, or 460 °C to 530 °C. By performing the second heat treatment within the above temperature range, it may synthesize a zirconium-containing second coating layer having an appropriate or suitable crystal phase including $Li_6Zr_2O_7$, and this coating layer may sufficiently perform a buffer function without acting as a resistor, thereby improving the capacity characteristics and cycle-life characteristics of the positive electrode active material. For example, if the second heat treatment temperature is less than 420 °C, the zirconium-containing coating layer may not form an appropriate or suitable crystal phase and may only act as resistance, which may deteriorate the capacity characteristics of the positive electrode active material. If the second heat treatment temperature exceeds 580 °C, the coating materials may be agglomerated or be coated only locally, reducing the buffer effect. In addition, zirconium may be absorbed into the positive electrode active material, failing to function as a buffer and causing deterioration in the capacity characteristics and cycle-life characteristics of the positive electrode active material.

The second heat treatment may be performed in an oxygen atmosphere, for example, for 5 hours to 25 hours, or for 10 hours to 20 hours. Under these conditions, a good or suitable coating layer having the desired or suitable properties may be formed.

In one or more embodiments, when dry mixing the preliminary positive electrode active material and the zirconium raw material in step (e.g., act or task) (ii), a lithium raw material may be mixed together. The lithium raw material is a lithium-containing compound and may be applied without limitation as long as dry mixing is possible. The lithium raw material may be, for example, $Li_2CO_3$, LiOH, LiF, a hydrate or an anhydrate thereof, or a combination thereof. In one or more embodiments, anhydrous lithium hydroxide may be used as the lithium raw material. For example, the lithium raw material may be mixed in an amount of greater than 1 part by mole and less than or equal to 4 parts by moles, for example, greater than 1 part by mole and less than or equal to 3 parts by moles, or greater than or equal to 2 parts by moles and less than or equal to 4 parts by moles per 1 part by mole of the zirconium raw material. When lithium raw materials are mixed together and heat-treated, a $Li_6Zr_2O_7$ crystal phase may be formed as lithium zirconium oxide in the second coating layer, which may increase lithium ionic conductivity and is advantageous in obtaining the second coating layer of an appropriate or suitable thickness in a good or suitable form. For example, the co-introduction of lithium during the zirconium coating step enables in-situ formation of lithium zirconium oxide during heat treatment, which not only enhances the ionic conductivity of the coating but also improves its adhesion and structural compatibility with the underlying boron-coated active material, thereby contributing to the overall electrochemical performance and stability of the all-solid-state rechargeable battery.

For example, in one or more embodiments, in step (e.g., act or task) (ii), the mixing may be performed through three or more dry mixing processes having different mixing speeds, for example, in one or more embodiments, the dry mixing process may include a low-speed section, a medium-speed section, and a high-speed section. In this regard, the low-speed section may refer to a section with a lowest mixing speed, the high-speed section may refer to a section with a highest mixing speed, and the medium-speed section may refer to a section with a mixing speed between the low-speed section and the high-speed section. For example, in one or more embodiments, the dry mixing may be performed using a Henschel mixer, and the low-speed section may be performed at a speed of 100 rpm to 500 rpm, the medium-speed section may be performed at a speed of 600 rpm to 1000 rpm, and the high-speed section may be performed at a speed of 1100 rpm to 2000 rpm. By satisfying this, it is advantageous to obtain the second coating layer having a good or suitable form and an appropriate or suitable and substantially uniform thickness while containing a mixed phase of $ZrO_2$ and $Li_6Zr_2O_7$ as lithium zirconium oxide in the second coating layer. For example, this controlled multi-speed dry mixing process ensures that the zirconium and lithium sources are thoroughly and uniformly distributed across the surface of the secondary particles, thereby promoting consistent reaction kinetics during the subsequent heat treatment and resulting in a robust and well-integrated dual-layer coating structure.

For example, in the dry mixing, a time period of the medium-speed section may be longer than each time period of the low-speed section and the high-speed section, for example, the low-speed section may be performed for 3 to 7 minutes, the medium-speed section may be performed for 9 to 20 minutes, and the high-speed section may be performed for 3 to 7 minutes. By satisfying this, it is advantageous to obtain the second coating layer having a good or suitable form and an appropriate and substantially uniform thickness while containing a mixed phase of $ZrO_2$ and $Li_6Zr_2O_7$ as lithium zirconium oxide in the second coating layer. For example, the desired duration of each mixing stage-particularly extending the medium-speed section relative to the low- and high-speed sections-the zirconium and lithium sources may be more uniformly distributed and reacted on the surface of the secondary particles, thereby facilitating the formation of a well-integrated second coating layer with a stable mixed phase of $ZrO_2$ and $Li_6Zr_2O_7$.

In the process of preparing the positive electrode active material for an all-solid-state rechargeable battery according to one or more embodiments, the order of coating in steps (i) and (ii) described above is important and critical. During the above preparing process, if the zirconium coating of step (e.g., act or task) (ii) is performed first and then the boron coating of step (e.g., act or task) (i) is performed, it is difficult to expect the effects of structural stabilization and performance improvement because the zirconium coating is performed in a state where the boron grain boundary coating portion and the boron doping layer are not formed during the zirconium coating of step (e.g., act or task) (ii). For example, when the boron coating is applied first, it facilitates the formation of a chemically and structurally favorable interface that supports the subsequent zirconium-based coating, thereby enabling the formation of a robust dual-layer structure with enhanced electrochemical stability and improved battery performance.

**Positive Electrode**

In one or more embodiments, a positive electrode may include the aforementioned positive electrode active material for an all-solid-state rechargeable battery and a sulfide-based solid electrolyte.

The positive electrode may be referred to as a positive electrode for a rechargeable lithium battery, and may be expressed as, for example, a positive electrode for an all-solid-state rechargeable battery. According to one or more embodiments, the positive electrode has low resistance, and may realize not only high initial charge/discharge capacity and efficiency, but also very high capacity per volume, excellent or suitable cycle-life characteristics, and high-rate capability.

For example, in the positive electrode, the sulfide-based solid electrolyte may be included in an amount of 1 wt% to 35 wt%, 5 wt% to 30 wt%, 10 wt% to 25 wt%, 10 wt% to 20 wt%, or 11 wt% to 15 wt%, based on 100 wt% of a total weight of the positive electrode active material and the sulfide-based solid electrolyte. When the amount of the sulfide-based solid electrolyte in the positive electrode satisfies the above range, the overall performance of the all-solid-state rechargeable battery may be improved by improving the ionic conductivity while minimizing or reducing the capacity degradation of the positive electrode.

**Sulfide-based Solid Electrolyte**

According to one or more embodiments, the positive electrode includes a sulfide-based solid electrolyte in addition to the positive electrode active material for an all-solid-state rechargeable battery described above.

The sulfide-based solid electrolyte included in the positive electrode may be in the form of particles, and an average particle diameter ($D_{50}$) of the particles may be 0.1 $\mu$m to 5 $\mu$m, for example, 0.1 $\mu$m to 3 $\mu$m, 0.1 $\mu$m to 2 $\mu$m, 0.5 $\mu$m to 1.9 $\mu$m, or 0.8 $\mu$m to 1 $\mu$m. The particle size (e.g., average particle size) of the sulfide-based solid electrolyte included in the positive electrode may be the same as or smaller than a particle size (average particle size) of the solid electrolyte included in a solid electrolyte layer which will be described later. By appropriately or suitably adjusting the size of the sulfide-based solid electrolyte particles included in the positive electrode, the capacity and energy density of the positive electrode may be increased and the ionic conductivity may be improved. The average particle diameter of the sulfide-based solid electrolyte may be measured from a microscope image, for example, by measuring the sizes of 20 particles in a scanning electron microscope image to obtain a particle size distribution and calculating $D_{50}$ from this.

The composition of the sulfide-based solid electrolyte included in the positive electrode may be the same as or different from the solid electrolyte included in the solid electrolyte layer described below. In one or more embodiments, the sulfide-based solid electrolyte included in the positive electrode may be, for example, an argyrodite-type (kind) sulfide-based solid electrolyte. The general descriptions on sulfide-based solid electrolytes and the descriptions on argyrodite-type (kind) sulfide-based solid electrolytes are the same as the sulfide-based solid electrolytes included in the solid electrolyte layer described below, and thus a detailed description thereof may refer to the descriptions of the sulfide-based solid electrolytes included in the solid electrolyte layer provided herein.

**Binder and Conductive Material**

According to one or more embodiments, the positive electrode may include a positive electrode current collector and a positive electrode active material layer on the positive electrode current collector, wherein the positive electrode active material layer includes the above-described positive electrode active material and a sulfide-based solid electrolyte. The positive electrode active material layer may further include at least one selected from among a binder and a conductive material.

The binder improves binding properties of positive electrode active material particles with one another and with the positive electrode current collector, and examples thereof may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but embodiments of the present disclosure are not limited thereto.

For example, an amount of the binder may be 0.1 wt% to 5 wt%, or 0.1 wt% to 3 wt%, based on 100 wt% of a total weight of the positive electrode active material layer.

The conductive material (e.g., electrically conductive material, e.g., electron conductor) is included to provide electrode conductivity, and any electrically conductive material may be used as a conductive material unless it causes an undesirable chemical change. Non-limiting examples of the conductive material may include a carbon-based material such as natural graphite, artificial graphite, carbon black, acetylene black, Ketjen black, a carbon fiber, a carbon nanofiber, a carbon nanotube, and/or the like; a metal-based material, in the form of a metal powder or a metal fiber, including copper, nickel, aluminum, silver, and/or the like; a conductive polymer such as a polyphenylene derivative; and/or a mixture thereof.

An amount of the conductive material in the positive electrode active material layer may be 0.1 wt% to 5 wt% or 0.1 wt% to 3 wt%, based on the total weight of 100 wt% of the positive electrode active material layer.

In one or more embodiments, an aluminum foil or stainless steel (SUS) may be used as the positive electrode current collector, but embodiments of the present disclosure are not limited thereto.

**All-solid-state Rechargeable Battery**

An all-solid-state rechargeable battery includes the aforementioned positive electrode. The all-solid-state rechargeable battery includes the aforementioned positive electrode, a negative electrode, and a solid electrolyte layer between the positive electrode and the negative electrode. The all-solid-state rechargeable battery may include not only a solid-state rechargeable battery in which all components are made of solids, but also a semi-solid rechargeable battery that includes some liquid components such as an electrolyte solution.

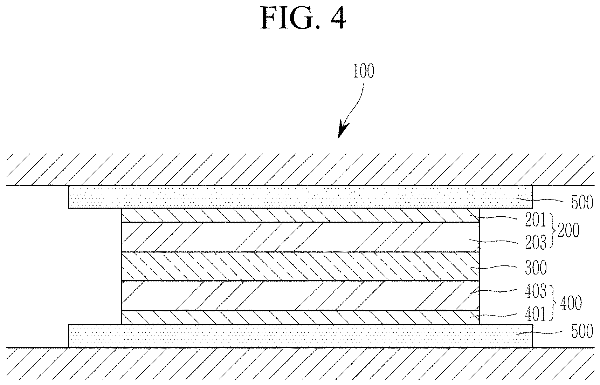

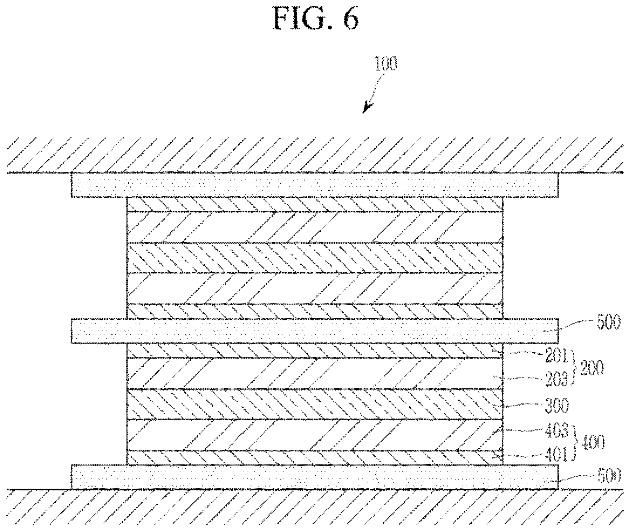

FIG. 4 is a cross-sectional view schematically illustrating an all-solid-state rechargeable battery according to one or more embodiments of the present disclosure. Referring to FIG. 4, the all-solid-state rechargeable battery 100 may have a structure that an electrode assembly, in which a negative electrode 400 including a negative electrode current collector 401 and a negative electrode active material layer 403, a solid electrolyte layer 300, and a positive electrode 200 including a positive electrode active material layer 203 and a positive electrode current collector 201 are stacked, is housed in a battery case. The all-solid-state rechargeable battery 100 may further include at least one elastic layer 500 on the outside of at least either one of the positive electrode 200 and/or the negative electrode 400. FIG. 4 shows one electrode assembly including the negative electrode 400, the solid electrolyte layer 300, and the positive electrode 200, but as illustrated in FIG. 6, two or more electrode assemblies may be stacked to manufacture an all-solid-state rechargeable battery.

**Negative Electrode**

In one or more embodiments, the negative electrode 400 may include a negative electrode current collector 401, and a negative electrode active material layer 403 on the negative electrode current collector. The negative electrode active material layer may include a negative electrode active material, and may further include a binder and/or a conductive material.

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example, crystalline carbon, amorphous carbon, or a combination thereof as a carbon-based negative electrode active material. The crystalline carbon may be irregularly shaped, sheet shaped, flake-shaped, sphere-shaped, or fiber shaped natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material capable of doping/dedoping lithium may be a Si-based negative electrode active material or a Sn-based negative electrode active material. The Si-based negative electrode active material may include silicon, a silicon-carbon composite, $SiO_x$ ($0<x\leq2$), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, $SnO_x$ ($0<x\leq2$), a Sn-based alloy, or a combination thereof.

The silicon-carbon composite may be a composite of silicon and amorphous carbon, in a form of particles. According to one or more embodiments, the silicon-carbon composite may be in the form of silicon particles and amorphous carbon coated on the surface of each of the silicon particles. For example, in one or more embodiments, the silicon-carbon composite may include a secondary particle (core) in which silicon primary particles are assembled (e.g., agglomerated) and an amorphous carbon coating layer (shell) on the surface of the secondary particle. In one or more embodiments, the amorphous carbon may also be present between the silicon primary particles, for example, the silicon primary particles may be coated with amorphous carbon. The secondary particles may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon coating layer on the surface of the core.

In one or more embodiments, the Si-based negative electrode active material or Sn-based negative electrode active material may be mixed with the carbon-based negative electrode active material.

In the negative electrode active material layer, the negative electrode active material may be included in an amount of 95 wt% to 99.8 wt% based on a total weight of 100 wt% of the negative electrode active material layer.

In one or more embodiments, the negative electrode active material layer may further include a binder and/or a conductive material. An amount of the binder in the negative electrode active material layer may be 0.1 wt% to 5 wt% based on the total weight of 100 wt% of the negative electrode active material layer. In addition, if the conductive material is further included, the negative electrode active material layer may include 90 wt% to 99.8 wt% of the negative electrode active material, 0.1 wt% to 5 wt% of the binder, and 0.1 wt% to 5 wt% of the conductive material, based on the total weight of 100 wt% of the negative electrode active material layer.

The binder (e.g., negative electrode binder) serves to well adhere the negative electrode active material particles to each other and also to well adhere the negative electrode active material to the negative electrode current collector. The binder may be a non-aqueous (e.g., water-insoluble) binder, an aqueous (e.g., water-soluble) binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The conductive material (e.g., negative electrode conductive material) may be included to provide electrode conductivity and any electrically conductive material may be used as a conductive material unless it causes an undesirable chemical change. Non-limiting examples of the conductive material include a carbon-based material such as natural graphite, artificial graphite, carbon black, acetylene black, Ketjen black, a carbon fiber, a carbon nanofiber, a carbon nanotube, and/or the like; a metal-based material, in a form of a metal powder or a metal fiber, including copper, nickel, aluminum silver, and/or the like; a conductive polymer such as a polyphenylene derivative; and/or a mixture thereof.

The negative electrode current collector may be selected from among copper foil, nickel foil, stainless steel foil, titanium foil, nickel foam, copper foam, a polymer substrate coated with a conductive metal, and a combination thereof.

**Precipitation-type (kind) Negative Electrode**

In one or more embodiments, the negative electrode for an all-solid-state rechargeable battery may be a precipitation-type (kind) negative electrode, unlike the aforementioned negative electrode. The precipitation-type (kind) negative electrode does not include a negative electrode active material during battery assembly, but may refer to a negative electrode in which lithium metal, and/or the like is precipitated or electrodeposited on the negative electrode during battery charging, thereby serving as a negative electrode active material.

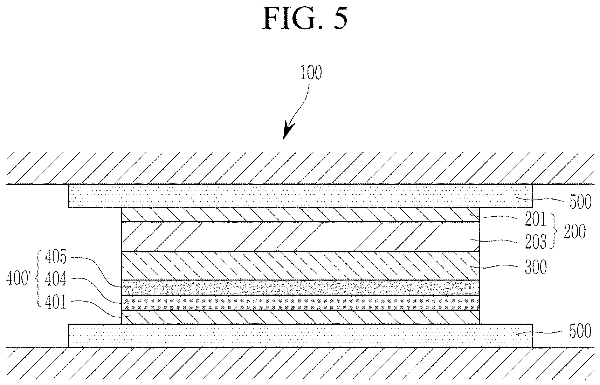

FIG. 5 is a schematic cross-sectional view of an all-solid-state rechargeable battery including a precipitation-type (kind) negative electrode according to one or more embodiments of the present disclosure. Referring to FIG. 5, the precipitation-type (kind) negative electrode 400' may include a negative electrode current collector 401 and a negative electrode coating layer 405 on the negative electrode current collector. In an all-solid-state rechargeable battery having such a precipitation-type (kind) negative electrode 400', initial charging begins in the absence of negative electrode active material, and during charging, high-density lithium metal is precipitated or electrodeposited between the negative electrode current collector 401 and the negative electrode coating layer 405 or on the negative electrode coating layer 405 to form a lithium metal layer 404, which can serve as a negative electrode active material. Accordingly, in an all-solid-state rechargeable battery that has been charged at least once, the precipitation-type (kind) negative electrode 400' may include, for example, a negative electrode current collector 401, a lithium metal layer 404 on the negative electrode current collector, and a negative electrode coating layer 405 on the lithium metal layer 404. The lithium metal layer 404 may be referred to as a layer in which lithium metal, and/or the like is precipitated during the charging process of the battery, and may be referred to as a metal layer, a lithium layer, a lithium electrodeposition layer, or a negative electrode active material layer.

The negative electrode coating layer 405 may be referred to as a lithium electrodeposition inducing layer or a negative electrode catalyst layer, and may include a lithiophilic metal, a carbon material, or a combination thereof.

The lithiophilic metal may include, for example, gold, platinum, palladium, silicon, silver, aluminum, bismuth, copper, germanium, indium, magnesium, nickel, tin, zinc, or a combination thereof, and may be composed of one of these or one or more suitable types (kinds) of alloys. If the lithiophilic metal exists in particle form (e.g., in the form of particles), its average particle diameter ($D_{50}$) may be less than or equal to 4 $\mu$m, for example, 10 nm to 4 $\mu$m, 10 nm to 1 $\mu$m, or 10 nm to 600 nm. For example, in one or more embodiments, the lithiophilic metal may be in a form of nanoparticles having an average particle diameter of several to several hundred nanometers.

The carbon material may be, for example, crystalline carbon, amorphous carbon, or a combination thereof. The crystalline carbon may be, for example, natural graphite, artificial graphite, mesophase carbon microbeads, or a combination thereof. The amorphous carbon may be, for example, carbon black, activated carbon, acetylene black, Denka black, Ketjen black, or a combination thereof.

If the negative electrode coating layer 405 includes both (e.g., simultaneously) the lithiophilic metal and the carbon material, a mixing ratio of the lithiophilic metal to the carbon material may be, for example, a weight ratio of 1:10 to 2:1. In this range, precipitation of lithium metal may be effectively promoted, and the characteristics of the all-solid-state rechargeable battery may be improved. For example, in one or more embodiments, the negative electrode coating layer 405 may include a carbon material on which the lithiophilic metal is supported, or it may include a mixture of lithiophilic metal particles and carbon material particles.

For example, in one or more embodiments, the negative electrode coating layer 405 may include the lithiophilic metal and amorphous carbon, and in these embodiments, it may effectively promote precipitation of lithium metal.

**Supported Compound**

In one or more embodiments, the negative electrode coating layer 405 may include a compound in which a lithiophilic metal is supported on a carbon material. The supported compound is distinguished from a simple mixture of lithiophilic metal and carbon material. If the negative electrode coating layer 405 includes a supported compound, the lithium metal layer 404 may be formed more uniformly (e.g., substantially uniformly), and the reversibility of precipitation and dissociation of lithium may be improved, thereby improving the cycle-life characteristics of the all-solid-state rechargeable battery. Here, the lithiophilic metal is the same as described above, and the carbon material may be, for example, amorphous carbon.

For example, in one or more embodiments, the amorphous carbon material (i.e., amorphous carbon) may be a single particle (e.g., in the form of single particles), an assembly having a form of secondary particle in which primary particles are assembled, or a combination of the single particle and the assembly. If the amorphous carbon material is a single particle (e.g., in the form of single particles), an average particle diameter may be less than or equal to 100 nm, for example, a nano size of 10 nm to 100 nm. If the amorphous carbon material is an assembly, a particle diameter (e.g., an average particle diameter) of the primary particles may be 20 nm to 100 nm, and a particle diameter (e.g., an average particle diameter) of the secondary particles may be 1 $\mu$m to 20 $\mu$m.

In one or more embodiments, a particle diameter (e.g., average particle diameter) of the primary particles of the assembly-shaped amorphous carbon material may be greater than or equal to 20 nm, greater than or equal to 30 nm, greater than or equal to 40 nm, greater than or equal to 50 nm, greater than or equal to 60 nm, greater than or equal to 70 nm, greater than or equal to 80 nm, or greater than or equal to 90 nm and may be less than or equal to 100 nm, less than or equal to 90 nm, less than or equal to 80 nm, less than or equal to 70 nm, less than or equal to 60 nm, less than or equal to 50 nm, less than or equal to 40 nm, or less than or equal to 30 nm. A shape of the primary particle may be spherical, elliptical, plate-shaped, or a combination thereof. In one or more embodiments, the shape of the primary particle may be spherical, elliptical, or a combination thereof.

In one or more embodiments, a particle diameter (e.g., average particle diameter) of the secondary particles (assembly) of the assembly-shaped amorphous carbon material may be greater than or equal to 1 $\mu$m, greater than or equal to 3 $\mu$m, greater than or equal to 5 $\mu$m, greater than or equal to 7 $\mu$m, greater than or equal to 10 $\mu$m, or greater than or equal to 15 $\mu$m, and less than or equal to 20 $\mu$m, less than or equal to 15 $\mu$m, less than or equal to 10 $\mu$m, less than or equal to 7 $\mu$m, less than or equal to 5 $\mu$m, or less than or equal to 3 $\mu$m.

The lithiophilic metal may be included in an amount of 33 wt% to 40 wt%, for example, 3 wt% to 30 wt%, 4 wt% to 25 wt%, 5 wt% to 20 wt%, or 5 wt% to 15 wt%, based on 100 wt% of a total weight of the compound in which the lithiophilic metal is supported on the carbon material. For example, in one or more embodiments, the lithiophilic metal may be included in an amount of 33 wt% to 40 wt%, for example, 3 wt% to 30 wt%, 4 wt% to 25 wt%, 5 wt% to 20 wt%, or 5 wt% to 15 wt%, based on 100 wt% of a total weight of the lithiophilic metal and the carbon material. The carbon material may be included in an amount of 60 wt% to 97 wt%, for example, 70 wt% to 97 wt%, 75 wt% to 96 wt%, 80 wt% to 95 wt%, or 85 wt% to 95 wt%, based on 100 wt% of the total weight of the compound in which the lithiophilic metal is supported on the carbon material. In one or more embodiments, the carbon material may be included in an amount of 60 wt% to 97 wt%, for example, 70 wt% to 97 wt%, 75 wt% to 96 wt%, 80 wt% to 95 wt%, or 85 wt% to 95 wt%, based on 100 wt% of the total weight of the lithiophilic metal and the carbon material. If the amounts of the lithiophilic metal and the carbon material satisfies the above respective ranges, a substantially uniform lithium metal layer may be effectively formed during charging.

In one or more embodiments, the carbon material and the lithiophilic metal may be chemically bonded through sulfur. For example, the carbon material and the lithiophilic metal may not be simply physically mixed but may be chemically bonded to each other. In this way, the bonding power between the carbon material and the lithiophilic metal is excellent or suitable, and the problem/issue of the carbon material and the lithiophilic metal being separated from each other during a mixing process may be effectively prevented or reduced. Additionally, the phenomenon of agglomeration of lithiophilic metals is prevented or reduced and they may be uniformly (e.g., substantially uniformly) dispersed within the negative electrode coating layer, thereby making the current distribution within the negative electrode substantially uniform and leading to substantially uniform precipitation of lithium metal.

When a carbon material and a lithiophilic metal are chemically bonded through sulfur, a peak related to the bond between the lithiophilic metal and sulfur can be confirmed in an X-ray photoelectron spectroscopy (XPS) spectrum. For example, if the lithiophilic metal includes Ag, a peak can be confirmed in the range of 160 eV to 162 eV, which is the Ag-S binding energy, in an S2p spectrum obtained by XPS analysis.

A composite in which a carbon material and a lithiophilic metal are chemically bonded through sulfur may be prepared by mixing the carbon material and sulfur-containing raw materials in a dry manner or a wet manner, optionally heat-treating them, and then supporting and heat-treating the lithiophilic metal.

A method of supporting a lithiophilic metal may be, for example, a method of mixing a mixture of a carbon material and a sulfur-containing raw material, a lithiophilic metal compound, and a reducing agent in a solvent. The solvent may include, for example, water, ethanol, glycerol, benzene, xylene, or a combination thereof, and the reducing agent may include $NaBH_4$, ascorbic acid, trisodium citrate, ethylene glycol, or a combination thereof. The lithiophilic metal compound may be a nitrate, sulfate, perchlorate, and/or the like containing a lithiophilic metal, and may include, for example, $AgNO_3$, $Ag_2SO_4$, $AgClO_4$, or a combination thereof.

The heat treatment after lithiophilic metal loading may usually be performed at a temperature at which the sulfur-containing raw material can be decomposed and removed, for example, 100 °C to 500 °C, 150 °C to 500 °C, 200 °C to 450 °C, or 200 °C to 400 °C. For example, if a thiol compound is used as a sulfur-containing raw material, it may be heat treated at 100 °C to 400 °C. The heat treatment may be performed for 2 hours to 20 hours in an atmosphere of nitrogen, argon, or a combination thereof.

A thickness of the negative electrode coating layer 405 may be, for example, 100 nm to 40 $\mu$m, or 500 nm to 30 $\mu$m, or 1 $\mu$m to 20 $\mu$m. If the negative electrode coating layer 405 satisfies the above thickness range, a lithium metal layer of substantially uniform thickness may be effectively formed during charging.

In one or more embodiments, the negative electrode coating layer 405 may further include a binder, for example, a conductive binder. Additionally, the negative electrode coating layer 405 may further include an additive such as a filler, a dispersant, an ion conductive agent, and/or the like.

The binder of the negative electrode coating layer 405 may include a non-aqueous (e.g., water-insoluble) binder, an aqueous (water-soluble) binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If an aqueous binder is used as the binder of the negative electrode coating layer 405, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The binder may be included in an amount of 0.1 to 5 wt%, 0.1 to 3 wt%, or 0.5 to 2 wt% based on 100 wt% of a total weight of the negative electrode coating layer 405.

**Lithium Metal Layer**

The negative electrode according to one or more embodiments is a type (kind) of precipitation-type (kind) negative electrode, and the all-solid-state rechargeable battery including the same begins initial charging in the absence of a negative electrode active material, and during charging, a lithium metal layer 404 is formed by precipitation or electrodeposition of high-density lithium metal between the negative electrode current collector and the negative electrode coating layer 405 or on the negative electrode coating layer 405, which may serve as a negative electrode active material. Therefore, an all-solid-state rechargeable battery that has been charged at least once may include, for example, a negative electrode current collector 401, a lithium metal layer 404 on the negative electrode current collector, and a negative electrode coating layer 405 on the lithium metal layer. The lithium metal layer 404 refers to a layer in which lithium ions are precipitated as lithium metal during the charging process of the battery, and may be expressed as a metal layer, a lithium layer, a lithium electrodeposition layer, or a negative electrode active material layer.

The lithium metal layer 404 may include a lithium metal or a lithium alloy. The lithium alloy may be, for example, a Li-Al alloy, a Li-Sn alloy, a Li-In alloy, a Li-Ag alloy, a Li-Au alloy, a Li-Zn alloy, a Li-Ge alloy, or a Li-Si alloy.

A thickness of the lithium metal layer 404 may be 1 $\mu$m to 500 $\mu$m, 5 $\mu$m to 500 $\mu$m, 5 $\mu$m to 400 $\mu$m, 5 $\mu$m to 300 $\mu$m, or 10 $\mu$m to 200 $\mu$m. If the thickness of the lithium metal layer is too thin, it is difficult to function as a lithium storage layer, and if it is too thick, performance may decrease as the battery volume increases.

In one or more embodiments, a lithium metal layer 404 with a substantially uniform and flat thickness may be formed by applying a compound in which the aforementioned lithiophilic metal is supported on a carbon material to the negative electrode coating layer 405. Therefore, according to one or more embodiments, the lithium metal layer 404 formed during charging may have a very uniform thickness and have a small thickness deviation. For example, the deviation of the thickness of the lithium metal layer 404 may be less than or equal to 40%, less than or equal to 30%, less than or equal to 20%, less than or equal to 15%, less than or equal to 10%, or less than or equal to 5%. For example, the deviation of the thickness of the lithium metal layer 404 may be calculated by measuring the thicknesses of 10 points in an electron microscope image of the cross-section of a negative electrode to calculate an arithmetic average, and then dividing the absolute value of the difference between one data and the arithmetic mean value by the arithmetic mean value and multiplying by 100. Also, for example, in one or more embodiments, the thickness of the lithium metal layer 404 may be 5 $\mu$m to 80 $\mu$m, and the standard deviation of the thickness may be 0.1 $\mu$m to 20 $\mu$m, 0.1 $\mu$m to 15 $\mu$m, 0.1 $\mu$m to 10 $\mu$m, 0.1 $\mu$m to 5 $\mu$m, or 0.1 $\mu$m to 3 $\mu$m. Likewise, the standard deviation of the thickness of the lithium metal layer 404 may be calculated by measuring the thicknesses of 10 points in an electron microscope image. For example, the standard deviation of the thickness of the lithium metal layer 404 may refer to a value calculated according to the following eqation, by measuring the thickness of the lithium metal layer 404 at 10 randomly selected points in an electron microscope image (e.g., SEM or STEM) of a cross-section of the negative electrode.

$$\sigma = \sqrt{\frac{1}{n}\sum_{i=1}^{n}(x_i - x_A)^2}$$

Here, $x_i$ represents the thickness (e.g., in $\mu$m) at each measurement point, $x_A$ represents the arithmetic mean of the 10 measured values, n represents the number of measurement points (e.g., 10), and $\sigma$ represents the standard deviation of the thickness of the lithium metal layer 404.

If the deviation or standard deviation of the lithium metal layer thickness satisfies the above range, it refers to that lithium metal is well precipitated in the form of a film of substantially uniform thickness, and thus the electrochemical properties of the all-solid-state rechargeable battery may be improved.

**Others**

Additionally, the negative electrode according to one or more embodiments may further include a thin film on a surface of the negative electrode current collector 401, that is, between the negative electrode current collector 401 and the negative electrode coating layer 405, or between the negative electrode current collector 401 and the lithium metal layer 404. The thin film may include an element capable of forming an alloy with lithium. The element capable of forming an alloy with lithium may include, for example, Al, Ag, Au, Bi, Cu, Ge, In, Mg, Ni, Pd, Pt, Si, Sn, Zn, or a combination thereof. The thin film may further planarize the precipitation form of the lithium metal layer 404 and help form the lithium metal layer 404 with a substantially uniform thickness. The thin film may be formed, for example, in a vacuum deposition method, a sputtering method, a plating method, and/or the like. The thin film may have, for example, a thickness of 1 nm to 500 nm.

**Negative Electrode Current Collector**

The negative electrode current collector 401 may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or a sheet. A thickness of the negative electrode current collector 401 may be, for example, 1 $\mu$m to 20 $\mu$m, 5 $\mu$m to 15 $\mu$m, or 7 $\mu$m to 10 $\mu$m.

**Solid Electrolyte Layer**

The solid electrolyte layer 300 may include an inorganic solid electrolyte, for example, a sulfide-based solid electrolyte, an oxide-based solid electrolyte, a halide-based solid electrolyte, and/or the like.

The type (kind) or component of the sulfide-based solid electrolyte included in the solid electrolyte layer is not particularly limited. For example, the sulfide-based solid electrolytes may include $Li_2S$-$P_2S_5$, $Li_2S$-$P_2S_5$-LiX (X is a halogen element, for example, I or Cl), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are each an integer, and Z may be Ge, Zn, or Ga), $Li_2S$-$GeS_2$, $Li_2S$-$SiS_2$-$Li_3PO_4$, $Li_2S$-$SiS_2$-$Li_pMO_q$ (p and q are each an integer and M may be P, Si, Ge, B, Al, Ga, or In), $Li_3PS_4$, $Li_7P_3S_{11}$, $Li_7PS_6$, or a combination thereof.

Such a sulfide-based solid electrolyte may be obtained by, for example, mixing $Li_2S$ and $P_2S_5$ in a molar ratio of 50:50 to 90:10 or 50:50 to 80:20 and optionally performing heat treatment. Within the above mixing ratio range, a sulfide-based solid electrolyte having excellent or suitable ionic conductivity may be prepared. The ionic conductivity may be further improved by adding $SiS_2$, $GeS_2$, $B_2S_3$, and/or the like as other components thereto.

Mechanical milling or a solution method may be applied as a mixing method of sulfur-containing raw materials for preparing a sulfide-based solid electrolyte. The mechanical milling is to make starting materials into particulates by putting the starting materials in a ball mill reactor and fervently/vigorously stirring them. The solution method may be performed by mixing starting materials in a solvent to obtain a solid electrolyte as a precipitate. In addition, in the case of heat-treatment after mixing, crystals of the solid electrolyte may be more robust and ionic conductivity may be improved. The heat treatment may be performed at a temperature range of 400 °C to 600 °C, for example, 450 °C to 500 °C, or 460 °C to 490 °C, for 5 hours to 30 hours, 10 hours to 24 hours, or 15 hours to 20 hours. When the heat treatment is performed under the above conditions, ionic conductivity may be maximized or increased. For example, in one or more embodiments, the sulfide-based solid electrolyte may be prepared by mixing sulfur-containing raw materials and performing heat treatment two or more times. In these embodiments, a sulfide-based solid electrolyte having high ionic conductivity and robustness may be prepared.

The sulfide-based solid electrolyte according to one or more embodiments may be prepared through a first heat treatment of mixing sulfur-containing raw materials and firing at 120 °C to 350 °C and a second heat treatment of mixing the resultant of the first heat treatment and firing the same at 350 °C to 800 °C. The first heat treatment and the second heat treatment may be each performed in an inert gas or nitrogen atmosphere. The first heat treatment may be performed for 1 hour to 10 hours, and the second heat treatment may be performed for 5 hours to 20 hours. Small raw materials may be milled through the first heat treatment, and a final solid electrolyte may be synthesized through the second heat treatment. Through such two or more heat treatments, a sulfide-based solid electrolyte having high ionic conductivity and high performance may be obtained, and such a solid electrolyte may be suitable for mass production. The temperature of the first heat treatment may be, for example, 150 °C to 330 °C, or 200 °C to 300 °C, and the temperature of the second heat treatment may be, for example, 380 °C to 700 °C, or 400 °C to 600 °C.

In one or more embodiments, the sulfide-based solid electrolyte may include an argyrodite-type (kind) sulfide in a form of particles. The argyrodite-type (kind) sulfide-based solid electrolyte particle may have high ionic conductivity close to a range of $10^{-4}$ S/cm to $10^{-2}$ S/cm, which is the ionic conductivity of general liquid electrolytes at room temperature, and may form a strong and suitable bond between the positive electrode active material and the solid electrolyte.

For example, the argyrodite-type (kind) sulfide-based solid electrolyte may include a compound represented by Chemical Formula 21.

$$\text{Chemical Formula 21} \qquad (\text{Li}_a \text{M21}_b \text{M22}_c)(\text{P}_d \text{M23}_e)(\text{S}_f \text{M24}_g)\text{X}_h$$

In Chemical Formula 21, $4 \leq a \leq 8$, M21 may be Mg, Ca, Cu, Ag, or a combination thereof, $0 \leq b < 0.5$, M22 may be Na, K, or a combination thereof, $0 \leq c < 0.5$, M23 may be Sn, Zn, Si, Sb, Ge, or a combination thereof, $0 < d < 4$, $0 \leq e < 1$, M24 may be N, O, $SO_n$, or a combination thereof, $1.5 \leq n \leq 5$, $3 \leq f \leq 12$, $0 \leq g < 2$, X may be F, Cl, Br, I, or a combination thereof, and $0 < h \leq 2$.

For example, in Chemical Formula 21, M21 element may be necessarily included, and in this regard, it may be expressed as $0 < b < 0.5$. In Chemical Formula 21, M23 may be understood as an element substituted for P and may be $0 < e < 1$. In Chemical Formula 21, M24 is substituted for S and, for example, may be $0 < g < 2$, and f, an element ratio of S, may be, for example, $3 \leq f \leq 7$. When M24 is $SO_n$, $SO_n$ may be, for example $S_4O_6$, $S_3O_6$, $S_2O_3$, $S_2O_4$, $S_2O_5$, $S_2O_6$, $S_2O_7$, $S_2O_6$, $SO_4$, or $SO_s$, or for example, may be $SO_4$.

For example, in Chemical Formula 21, $a+b+c+h=7$, $d+e=1$, and $f+g+h=6$.

In one or more embodiments, the argyrodite-type (kind) sulfide-based solid electrolyte particles may include $Li_6PS_5Cl$, $Li_6PS_5Br$, $Li_{56}PS_{46}Cl_{12}$, $Li_{6.2}PS_{5.2}Br_{0.8}$, $Li_{5.75}PS_{4.75}Cl_{1.25}$, $(Li_{5.69}CU_{0.06})PS_{4.75}Cl_{1.25}$, $(Li_{5.72}Cu_{0.03})PS_{4.75}Cl_{1.25}$, $(Li_{5.69}Cu_{0.06})P(S_{4.70}(SO_4)_{0.05})Cl_{1.25}$, $(Li_{5.69}CU_{0.06})P(S_{4.60}(SO_4)_{0.15})Cl_{1.25}$, $(Li_{5.72}Cu_{0.03})P(S_{4.725}(SO_4)_{0.025})Cl_{1.25}$, $(Li_{5.72}Na_{0.03})P(S_{4.725}(SO_4)_{0.025})Cl_{1.25}$, $Li_{5.75}P(S_{4.725}(SO_4)_{0.025})Cl_{1.25}$, or a combination thereof, but embodiments of the present disclosure are not limited thereto.

The argyrodite-type (kind) sulfide-based solid electrolyte may be prepared, for example, by mixing lithium sulfide and phosphorus sulfide, and optionally lithium halide. Heat treatment may be performed after mixing them. The heat treatment may include, for example, two or more heat treatment steps. The method of preparing the argyrodite-type (kind) sulfide-based solid electrolyte may include, for example, a first heat treatment in which raw materials are mixed and fired at 120 °C to 350 °C, and a second heat treatment in which the resultant of the first heat treatment is mixed again and fired at 350 °C to 800 °C.

For example, in a solid electrolyte-containing coating layer, which may be coated on the positive electrode active material, or the solid electrolyte layer 300, the sulfide-based solid electrolyte may be in the form of particles, and the average particle diameter ($D_{50}$) of the particles may be, for example, 0.1 $\mu$m to 1.5 $\mu$m, 0.3 $\mu$m to 1 $\mu$m, or 0.8 $\mu$m to 1 $\mu$m. The average particle diameter ($D_{50}$) may be measured from an electron microscope image, for example, by measuring the size (diameter or long axis length) of 20 particles in an SEM image to obtain a particle size distribution, and calculating the diameter of the particles having a cumulative volume of 50 volume% in the particle size distribution. The size of the sulfide-based solid electrolyte in the solid electrolyte layer may be smaller than or equal to the size of the sulfide-based solid electrolyte particles mixed in the positive electrode.

The oxide-based solid electrolyte may include, for example, $Li_{1+x}Ti_{2-x}Al(PO_4)_3$ (LTAP) ($0 \le x \le 4$), $Li_{1+x+y}Al_xTi_{2-x}Si_yP_{3-y}O_{12}$ ($0 < x < 2$, $0 \le y < 3$), $BaTiO_3$, $Pb(Zr,Ti)O_3$(PZT), $Pb_{1-x}La_xZr_{1-y}Ti_yO_3$ (PLZT) ($0 \le x < 1$, $0 \le y < 1$), $Pb(Mg_3Nb_{2/3})O_3$-$PbTiO_3$ (PMN-PT), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, lithium phosphate ($Li_3PO_4$), lithium titanium phosphate ($Li_xTi_y(PO_4)_3$, $0 < x < 2$, $0 < y < 3$), $Li_{1+x+y}(Al, Ga)_x(Ti, Ge)_{2-x}Si_yP_{3-y}O_{12}$ ($0 \le x \le 1$, $0 \le y \le 1$), lithium lanthanum titanate ($Li_xLa_yTiO_3$, $0 < x < 2$, $0 < y < 3$), $Li_2O$, $LiAlO_2$, $Li_2O$-$Al_2O_3$-$SiO_2$-$P_2O_5$-$TiO_2$-$GeO_2$-based ceramics, Garnet-based ceramics $Li_{3+x}La_3M_2O_{12}$ (wherein M = Te, Nb, or Zr; x is an integer of 1 to 10), or a mixture thereof.

The halide-based solid electrolyte may include a halogen element as a main component, meaning that a ratio of the halide element to all elements constituting the solid electrolyte is 50 mol% or more, 70 mol% or more, 90 mol% or more, or 100 mol%. As an example, the halide-based solid electrolyte may not include (e.g., may exclude any) sulfur element.

The halide-based solid electrolyte may include a lithium element, a metal element other than lithium, and a halogen element. The metal element other than lithium may include Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof. The halogen element may be F, Cl, Br, I, or a combination thereof, and for example, it may be Cl, Br, or a combination thereof. The halide-based solid electrolyte may be, for example, represented by $Li_aM_1X_6$ (M may be Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof, X may be F, Cl, Br, I, or a combination thereof, and $2 \le a \le 3$). In one or more embodiments, the halide-based solid electrolyte may include, for example, $Li_2ZrCl_6$, $Li_{2.7}Y_{0.7}Zr_{0.3}Cl_6$, $Li_{2.5}Y_{0.5}Zr_{0.5}Cl_6$, $Li_{2.5}In_{0.5}Zr_{0.5}Cl_6$, $Li_2In_{0.5}Zr_{0.5}Cl_6$, $Li_3YBr_6$, $Li_3YCl_6$, $Li_3YBr_2Cl_4$, $Li_3YbCl_6$, $Li_{2.6}Hf_{0.4}Yb_{0.6}Cl_6$, or a combination thereof, but embodiments of the present disclosure are not limited thereto.

In one or more embodiments, an average particle diameter ($D_{50}$) of the solid electrolyte included in the solid electrolyte layer 300 may be greater than an average particle diameter ($D_{50}$) of the solid electrolyte included in the positive electrode 200. In this way, overall performance may be improved by maximizing or increasing the energy density of the all-solid-state rechargeable battery and increasing the mobility of lithium ions. For example, in one or more embodiments, the average particle diameter ($D_{50}$) of the sulfide-based solid electrolyte particles included in the positive electrode 200 may be 0.1 μm to 1.9 μm, or 0.1 μm to 1.0 μm, and the average particle diameter (D50) of the solid electrolyte included in the solid electrolyte layer 300 may be 2.0 μm to 5.0 μm, or 2.0 μm to 4.0 μm, or 2.5 μm to 3.5 μm. If this particle diameter range is satisfied, the energy density of the all-solid-state rechargeable battery may be maximized or increased, and the transfer of lithium ions is facilitated, thereby suppressing or reducing resistance and thus improving the overall performance of the all-solid-state rechargeable battery. Here, the average particle diameter ($D_{50}$) of the solid electrolyte may be measured through a particle size analyzer using a laser diffraction method.

In one or more embodiments, the solid electrolyte layer 300 may further include a binder in addition to the solid electrolyte. For example, the binder may be a styrene butadiene rubber, polytetrafluoroethylene, polyvinylidene fluoride, polyethylene, an acrylate-based polymer, or a combination thereof, but embodiments of the present disclosure are not limited thereto, and anything used as a binder in the art may be used. The acrylate-based polymer may be, for example, poly(butyl acrylate), polyacrylate, polymethacrylate, or a combination thereof.

The solid electrolyte layer 300 may be formed by adding a solid electrolyte to a binder solution, coating it on a base film, and drying it. The solvent for the binder solution may be isobutyl isobutyrate, xylene, toluene, benzene, hexane, or a combination thereof. Because the solid electrolyte layer forming process is widely suitable in the art, detailed description will not be provided.

A thickness of the solid electrolyte layer 300 may be, for example, 10 μm to 800 μm.

In one or more embodiments, the solid electrolyte layer 300 may further include an alkali metal salt, and/or an ionic liquid, and/or a conductive polymer.

The alkali metal salt may be, for example, a lithium salt. An amount of the lithium salt in the solid electrolyte layer may be greater than or equal to 1 M, for example, 1 *M* to 4 *M.* In this way, the lithium salt may improve ionic conductivity by improving lithium ion mobility of the solid electrolyte layer.

The lithium salt may be applied without type (kind) limitations, and may include, for example, $LiPF_6$, $LiBF_4$, $LiSbF_6$, $LiAsF_6$, $LiClO_4$, $LiAlO_2$, $LiAlCl_4$, $LiPO_2F_2$, LiCl, LiI, LiSCN, $LiN(CN)_2$, lithium bis(oxalato)borate (LiBOB), lithium difluoro (oxalato)borate (LiDFOB), lithium difluorobis(oxalato)phosphate (LiDFBP), lithium bis(trifluoromethane sulfonyl) imide (LiTFSI), lithium bis(fluoro)sulfonyl)imide (LiFSI), lithium bis(pentafluoroethanesulfonyl)imide (LiBETI), lithium trifluoromethane sulfonate, lithium tetrafluoroethane sulfonate, or a combination thereof.

For example, in one or more embodiments, the lithium salt may be an imide-based lithium salt such as LiTFSI, LiFSI, LiBETI, or a combination thereof. The imide-based lithium salt may maintain or improve ionic conductivity by appropriately or suitably maintaining chemical reactivity with the ionic liquid.

The ionic liquid has a melting point below room temperature, so it is in a liquid state at room temperature and refers to a salt or room temperature molten salt composed of ions alone.

The ionic liquid may be a compound including a) at least one cation selected from among an ammonium-based ion, a pyrrolidinium-based ion, a pyridinium-based ion, a pyrimidinium-based ion, an imidazolium-based ion, a piperidinium-based ion, a pyrazolium-based ion, an oxazolium-based ion, a pyridazinium-based ion, a phosphonium-based ion, a sulfonium-based ion, a trizolium-based ion, and a mixture thereof, and b) at least one anion selected from among $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$.

In one or more embodiments, the ionic liquid may be, for example, one or more selected from among N-methyl-N-propylpyrrolidinium bis(trifluoromethanesulfonyl)imide, N-butyl-N-methylpyrrolidium bis(3-trifluoromethylsulfonyl) imide, 1-butyl-3-methylimidazolium bis(trifluoromethylsulfonyl)amide, and 1-ethyl-3-methylimidazolium bis(trifluoromethylsulfonyl)amide, or a combination thereof.

A weight ratio of the solid electrolyte to the ionic liquid in the solid electrolyte layer 300 may be 0.1:99.9 to 90:10, for example, 10:90 to 90:10, 20:80 to 90:10, 30:70 to 90: 10, 40:60 to 90:10, or 50:50 to 90:10. The solid electrolyte layer 300 satisfying the above ranges may maintain or improve ionic conductivity by improving the electrochemical contact area with the electrode. Accordingly, the energy density, discharge capacity, rate capability, and/or the like of the all-solid-state rechargeable battery may be improved.

The all-solid-state rechargeable battery may be a unit cell with a structure of positive electrode/solid electrolyte layer/negative electrode, a bicell with a structure of negative electrode/solid electrolyte layer/positive electrode/solid electrolyte layer/negative electrode, or a stacked battery in which the structure of the unit cell is repeated (see FIG. 6).

A shape of the all-solid-state rechargeable battery is not particularly limited, and may be, for example, coin-shaped, button-shaped, sheet-shaped, stacked-shaped, cylindrical, flat, and/or the like. Additionally, the all-solid-state rechargeable battery may also be applied to large batteries used in electric vehicles, and/or the like. For example, in one or more embodiments, the all-solid-state rechargeable battery may also be used in hybrid vehicles such as plug-in hybrid electric vehicles (PHEV). In addition, it may be used in a field requiring a large amount of power storage, and may be used, for example, in an electric bicycle or a power tool. In addition, the all-solid-state rechargeable battery may be used in one or more suitable fields such as portable electronic devices.

Examples and comparative examples of the present disclosure will be described in more detail below. However, the following examples are merely examples of the present disclosure, and the present disclosure is not limited to the following examples.

## Example 1

### 1. Preparation of Nickel-based Composite Hydroxide

The nickel-based composite hydroxide ($Ni_{0.945}CO_{0.04}Al_{0.015}(OH)_2$), which was a precursor of the positive electrode active material, was synthesized through the coprecipitation method described below. Nickel sulfate ($NiSO_4 \cdot 6H_2O$), cobalt sulfate ($CoSO_4 \cdot 7H_2O$), and sodium aluminum sulfate ($NaAl(SO_4)_2 \cdot 12H_2O$) were mixed in a molar ratio of 94.5:4:1.5 and dissolved in distilled water as a solvent to prepare a mixed solution of the metal raw materials. In addition, in order to form a complex compound, ammonia water ($NH_4OH$) and sodium hydroxide (NaOH) as a precipitant were prepared.

### 1st step (e.g., act or task) : 2.5 kW/m$^3$, $NH_4OH$ 0.40 *M*, pH 10.5 to 11.5, reaction time: 6 hours

First, ammonia water at a concentration of 0.40 *M* was added to a reactor. The metal raw material mixed solution and the complexing agent ($NH_4OH$) were added thereto at 85 mL /min and 10 mL /min, respectively, at a stirring power of 2.5 kW/m$^3$ and a reaction temperature of 50 °C. In order to maintain pH, the reaction proceeded for 6 hours, while adding NaOH thereto. As a reaction result, after confirming that the obtained core particles had an average size of 6.5 $\mu$m to 7.5 $\mu$m, the 2nd step (e.g., act or task) was performed as follows.

### 2nd step (e.g., act or task) : 2.0 kW/m$^3$, $NH_4OH$ 0.45 *M*, pH 10.5 to 11.5, reaction time: 18 hours

While maintaining the reaction temperature of 50 °C, after adding the metal raw material mixed solution and the complexing agent by changing each speed to 85 mL /min and 12 mL /min, respectively, the concentration of the complexing agent was adjusted to 0.45 *M*. In order to maintain pH, while adding NaOH thereto, a reaction proceeded for 18 hours. Here, the stirring power was reduced to 2.0 kW/m$^3$, which was lower than that of the 1st step (e.g., act or task) to perform the reaction. After confirming product particles including a core and an intermediate layer to have an average size of 13.5 $\mu$m to 14 $\mu$m by performing this reaction, the 3rd step (e.g., act or task) was performed as follows.

### 3rd step (e.g., act or task) : 1.5 kW/m$^3$, $NH_4OH$ 0.45 *M*, pH 10.5 to 11.5, reaction time: 14 hours

While maintaining the reaction temperature of 50 °C, each input speed of the metal raw material mixed solution and the complexing agent and the concentration of the complexing agent were set at the same as in the 2nd step (e.g., act or task). In order to maintain pH, a reaction proceeded for 14 hours, while adding NaOH thereto. Here, the stirring power was reduced to 1.5 kW/m$^3$, which was lower than that of the 2nd step (e.g., act or task). The obtained resulting material was washed and hot air-dried at 150 °C for 24 hours to obtain a nickel-based composite hydroxide ($Ni_{0.945}Co_{0.04}Al_{0.015}(OH)_2$).

## 2. Preparation of Preliminary Positive Electrode Active Material

In the relationship between the nickel-based composite hydroxide and LiOH, LiOH was mixed so that the molar ratio of Li/(Ni+Co+Al) = 0.98 was satisfied, boric acid was mixed so that boron was 0.25 mol% based on the total element excluding Li, O, and H in the mixture, the mixture was placed in a furnace, the temperature was raised to 700 °C for 8 hours in an oxygen atmosphere, and a first heat treatment was performed maintaining the maximum temperature of 700 °C for 7 hours to obtain a preliminary positive electrode active material.

The obtained preliminary positive electrode active material was confirmed to be a secondary particle including a lithium nickel-based composite oxide ($Li_{0.96}Ni_{0.945}CO_{0.04}Al_{0.0151}O_2$) and having an average particle diameter ($D_{50}$) of approximately 13.8 $\mu$m. From the SEM analysis of the cross-section of the secondary particles, it was confirmed that the secondary particles had an internal portion with an irregular porous structure and an external portion with a radial array structure.

In addition, from the mass analysis results of Time-of-Flight Secondary-Ion Mass Spectrometry (ToF-SIMS), it was confirmed that the positive electrode active material was evenly coated with lithium boron oxide such as $LiBO_2$ on the surface of the secondary particles.

In addition, from the ICP emission spectroscopy analysis results, the boron content for 100 wt% of a total weight of the positive electrode active material before washing was 1120 ppm, and the boron content for 100 wt% of the total weight of the positive electrode active material after washing was 50 ppm. Boron detected even after washing was confirmed to be coated on the internal grain boundaries of secondary particles. The boron removed during the washing process corresponds to the component coated on the surface of the secondary particles and is confirmed to be 1120-50 = 1070 ppm. Accordingly, the ratio of the weight of boron in the first coating layer and the weight of boron in the grain boundary boron coating portion was calculated to be approximately 95:5. Furthermore, Transmission electron microscopy-Electron energy loss spectroscopy (TEM-EELS) analysis was performed from the surface to the internal direction on the cross-section of the secondary particle, and it was confirmed that a boron-doped layer was formed in a region corresponding to a depth of 2 nm to 5 nm from the outermost surface of the secondary particle. For example, it can be seen that a boron doping layer was formed in the internal portion of the primary particle exposed on the surface of the secondary particle. The boron doping layer was formed in a layer form along the perimeter of the secondary particle while being located in the internal portion of the secondary particle, and is distinct from the concept of evenly being doped in the internal portion of the secondary particle.

## 3. Preparation of Positive Electrode Active Material

100 parts by mole of the preliminary positive electrode active material, 0.25 parts by mole of zirconium oxide ($ZrO_2$) having a D50 of 80 nm, and 0.5 parts by mole of anhydrous lithium hydroxide (LiOH) were placed in a Henschel mixer and mixed to perform coating. At this time, the mixer was operated at low, medium, and high speeds to prevent or reduce layer separation and ensure even coating. In the low-speed section, preliminary dispersion was performed at 200 rpm for 5 minutes, in the medium-speed section, main mixing was performed at 800 rpm for 10 minutes, and in the high-speed section, high-speed dispersion was performed at 1500 rpm for 5 minutes to strengthen the surface coating.

Subsequently, a (second) heat treatment was performed at 500 °C for 15 hours under an oxygen atmosphere, preparing a final positive electrode active material in which a coating layer was formed. When the coating layer formed in this way was analyzed to examine crystal phases through Scanning Transmission Electron Microscopy - Energy Dispersive X-ray Spectroscopy (STEM-EDS) and HRTEM, it was confirmed that the coating layer had a $ZrO_2$ crystal phase, a $Li_6Zr_2O_7$ crystal phase, and a Zr-containing amorphous phase.

The obtained positive electrode active material contained a lithium nickel-based composite oxide ($Li_{0.96}Ni_{0.945}CO_{0.04}Al_{0.15}O_2$) in the form of secondary particles, in which a plurality of primary particles were agglomerated, which had a radial structure and an average particle diameter ($D_{50}$) of 13.8 $\mu$m, and of which the surface was primarily coated with a boron-containing compound and secondarily coated with a zirconium compound.

## 4. Preparation of Solid Electrolyte ($Li_6PS_5Cl$, Argyrodite)

An argyrodite-type (kind) sulfide-based solid electrolyte was synthesized through a method described herein. As raw materials, lithium sulfide ($Li_2S$), phosphorus pentasulfide ($P_2S_5$), and lithium chloride (LiCl) were prepared and then, mixed in a molar ratio of 2.5:0.5:1 to prepare a mixed powder. The mixing of the raw materials and its subsequent pre- and post-heat treatments were all conducted in a glove box under an argon atmosphere. The mixed powder was uniformly (e.g., substantially uniformly) mixed with a Henschel mixer and primarily fired at 250 °C for 5 hours in a tube furnace with argon gas flowing at a constant speed of 8 SLM (standard liters per minute).

The primarily fired powder was uniformly (e.g., substantially uniformly) mixed again with the Henschel mixer and filtered with a sieve and then, secondarily fired at 500 °C for 10 hours in the tube furnace with argon gas flowing at a constant speed of 8 SLM. The secondarily fired powder was pulverized and filtered with a sieve, obtaining an argyrodite-type (kind) sulfide-based solid electrolyte of $Li_6PS_5Cl$. The sulfide-based solid electrolyte obtained in this way was in the form of particles having an average particle diameter ($D_{50}$) of 0.85 $\mu$m, which was measured by using a particle size analyzer (PSA).

## 5. Manufacturing of Positive Electrode

85 wt% of the final positive electrode active material, 13.44 wt% of the argyrodite-type (kind) sulfide-based solid electrolyte of $Li_6PS_5Cl$ having $D_{50}$ of 0.85 $\mu$m, 1 wt% of a PVdF binder, 0.45 wt% of a carbon nanotube conductive material, and 0.11 wt% of hydrogenated nitrile butadiene rubber (HNBR) as a dispersant were added to an isobutyl isobutyrate (IBIB) solvent to prepare a positive electrode composition. This positive electrode composition was coated on an aluminum foil as a positive electrode current collector and then, dried and compressed (warm isostatic press (WIP), 500 Mpa, 85 °C, 30 min), manufacturing a positive electrode.

## 6. Manufacturing of Precipitation-type (kind) Negative Electrode

Carbon black and 2-naphthalene thiol powder were mixed in a weight ratio of 10:1 and heat-treated at 90 °C. The heat-treated product was added to a water solvent, and $AgNO_3$ and $NaBH_4$ as a reducing agent were added thereto and then, mixed. Herein, an amount of $AgNO_3$ was 11 wt% based on 100 wt% of a total amount of carbon black and $AgNO_3$, and an amount of $NaBH_4$ was 22 parts by weight based on 100 parts by weight of $AgNO_3$. The obtained product was heat-treated at 400 °C for 4 hours under a nitrogen atmosphere, preparing a compound in which Ag was supported on the carbon material. The prepared Ag-C supported compound had 94.6 wt% of the carbon material and 5.4 wt% of Ag based on a total amount of the carbon material and Ag, and an amount of sulfur was 1.2 wt% based on 100 wt% of a total weight of the Ag-C supported compound. As the prepared Ag-C supported compound was subjected to a transmission electron microscope (TEM) analysis, it was confirmed that silver was uniformly (e.g., substantially uniformly) dispersed on the carbon material. In addition, when the Ag-C supported compound was subjected to x-ray photoelectron spectroscopy (XPS) to measure a Sp2 spectrum, a peak corresponding to Ag-S binding energy was detected at 161.8 eV.

The prepared Ag-C supported compound, a styrene-butadiene rubber, and sodium carboxymethyl cellulose were mixed in a weight ratio of 100:6:3 in a water solvent to prepare a negative electrode coating layer composition.

The prepared negative electrode coating layer composition was coated on a 10 $\mu$m-thick stainless steel foil current collector and then, vacuum-dried at 80 °C, manufacturing a precipitation-type (kind) negative electrode in which a 12 $\mu$m-thick negative electrode coating layer was formed on the current collector surface.

## 7. Manufacturing of All-solid-state Rechargeable Battery Cell

An argyrodite-type (kind) solid electrolyte of $Li_6PS_5Cl$ with $D_{50}$ of 3.0 $\mu$m was added to an IBIB solvent containing an acryl-based binder, preparing a composition for forming a solid electrolyte layer. The composition was cast on a releasing film and then, dried at room temperature to form a solid electrolyte layer.

After cutting the positive and negative electrodes and the solid electrolyte layer, the solid electrolyte layer was laminated on the positive electrode surface, and the negative electrode was laminated thereon. The obtained laminate was sealed in a pouch shape and then, subjected to warm isostatic press under 500 MPa at a high temperature of 80 °C for 30 minutes, manufacturing an all-solid-state rechargeable battery cell.

## Comparative Example 1

An all-solid-state rechargeable battery cell was substantially in substantially the same manner as in Example 1 except that the preliminary positive electrode active material was used without the process of preparing the positive electrode active material (i.e., the '3. Preparation of Positive electrode active material').

## Comparative Example 2

An all-solid-state rechargeable battery cell was substantially in substantially the same manner as in Example 1 except that the preliminary positive electrode active material prepared by not mixing boric acid was used without the process of preparing the positive electrode active material (i.e., the '3. Preparation of Positive electrode active material').

**Comparative Example 3**

An all-solid-state rechargeable battery cell was substantially in substantially the same manner as in Example 1 except that a nickel-based composite hydroxide was prepared in the following method.

**3.1. Preparation of Nickel-based Composite Hydroxide According to Comparative Example 3**

Nickel sulfate ($NiSO_4 \cdot 6H_2O$), cobalt sulfate ($CoSO_4 \cdot 7H_2O$), and sodium aluminum sulfate ($NaAl(SO_4)_2 \cdot 12H_2O$) as metal raw materials were mixed in a molar ratio of 94.5:4:1.5 and then, dissolved in a distilled water solvent to prepare a mixed solution, and in addition, ammonia water ($NH_4OH$) and sodium hydroxide (NaOH) as a precipitant were prepared.

After diluting the ammonia water and adding the diluted solution to a continuous reactor, the metal raw material mixed solution was continuously added thereto, and then, the sodium hydroxide was added thereto to maintain pH inside the reactor. After slowly performing a reaction for 80 hours, when the reaction was stabilized, a product overflowing therefrom was collected and then, washed and dried, finally obtaining a final precursor. Accordingly, prepared was a nickel-based composite hydroxide ($Ni_{0.945}CO_{0.04}Al_{0.015}(OH)_2$) in the form of secondary particles in which primary particles were not radially aligned.

**3.2. Preparation of Preliminary Positive Electrode Active Material According to Comparative Example 3**

The nickel-based composite hydroxide was mixed with LiOH to satisfy a molar ratio of Li/(Ni+Co+Al)=1.00, and boric acid was mixed therewith to have 0.25 mol% of boron based on total elements except for Li, O, and H in the mixture and then, placed in a furnace and heated to 710 °C for 8 hours under an oxygen atmosphere, obtaining a preliminary positive electrode active material.

In order to facilitate understanding, positive electrode active materials and positive electrode designs of Example 1 and Comparative Examples 1 to 3 are briefly presented in Table 1.

Table 1

|  | Hydroxide structure | Preliminary coating layer | Final coating layer |
|---|---|---|---|
| Example 1 | radial | LiBO$_2$ | ZrO$_2 \cdot$Li$_6$Zr$_2$O$_7$ |
| Comparative Example 1 | | | None |
| Comparative Example 2 | | None | None |
| Comparative Example 3 | non-radial | LiBO$_2$ | ZrO$_2 \cdot$Li$_6$Zr$_2$O$_7$ |

**Comparative Example 4**

An all-solid-state rechargeable battery cell was manufactured substantially in substantially the same manner as in Example 1 except that the second heat treatment temperature was changed to 400 °C in the process of preparing the positive electrode active material.

**Comparative Example 5**

An all-solid-state rechargeable battery cell was manufactured substantially in substantially the same manner as in Example 1 except that the second heat treatment temperature was changed to 600 °C in the process of preparing the positive electrode active material.

**Evaluation Example 1: Evaluation of Initial Charge/discharge Capacity of All-solid-state Rechargeable Battery Cells**

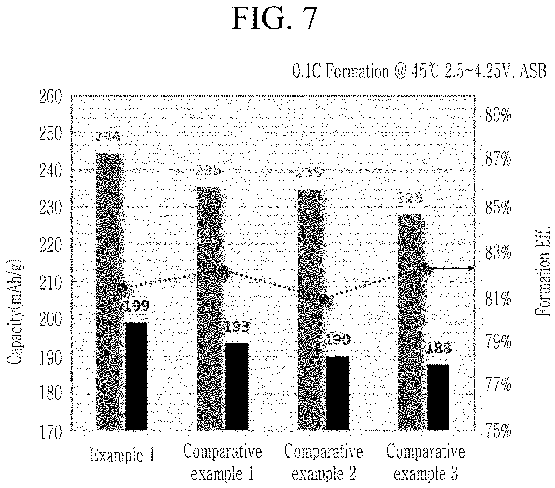

The all-solid-state rechargeable battery cells of Example 1 and Comparative Examples 1 to 3 were each charged to an upper limit voltage of 4.25 V at a constant current of 0.1 C and to 0.05 C at the constant voltage and then, discharged to a discharge cut-off voltage of 2.5 V at 0.1 C at 45 °C to measure initial charge/discharge capacity, and calculate the formation efficiency based on the initial discharge capacity/initial charge capacity-formation efficiency, and the results are shown in FIG. 7 and Table 2.

Table 2

| | Initial Charge capacity (mAh/g) | Initial Discharge capacity (mAh/g) |
|---|---|---|
| Example 1 | 244.4 | 198.9 |
| Comparative Example 1 | 235.3 | 193.4 |
| Comparative Example 2 | 234.8 | 189.9 |
| Comparative Example 3 | 228.0 | 187.7 |

Referring to FIG. 7 and Table 2, Example 1, compared to Comparative Examples 1 to 3, exhibited high initial charge/discharge capacity, which confirmed excellent or suitable initial charge and discharge characteristics.

Compared to Comparative Example 2, Comparative Example 1, in which boron was coated inside and outside of the secondary particles, exhibited high initial charge/discharge capacity, which confirmed excellent or suitable initial charge and discharge characteristics. This is understood to be because the coated boron acted as a buffer layer, lowering interfacial resistance between positive electrode active material and solid electrolyte.

In addition, compared to Comparative Example 1, Example 1, in which a coating layer of a mixture of $ZrO_2$ crystal phase, $Li_6Zr_2O_7$ crystal phase, and Zr-containing amorphous phase was additionally present on the surface of the secondary particles, exhibited improved initial charge capacity and initial discharge capacity. This is understood to be because this additional coating layer containing a Zr component supplemented a function of the buffer layer, which was insufficient with boron alone, thereby additionally improving interfacial resistance between positive electrode active material and solid electrolyte.

However, even though the function of the buffer layer was sufficient, if a generally-used non-radial positive electrode active material was used as in Comparative Example 3, both (e.g., simultaneously) initial charge capacity and initial discharge capacity were reduced, compared to Example 1. This is understood to be because lithium mobility inside the positive electrode active material particles was lowered.

**Evaluation Example 2: Evaluation of Cycle-life Characteristics of All-solid-state Rechargeable Battery Cells**

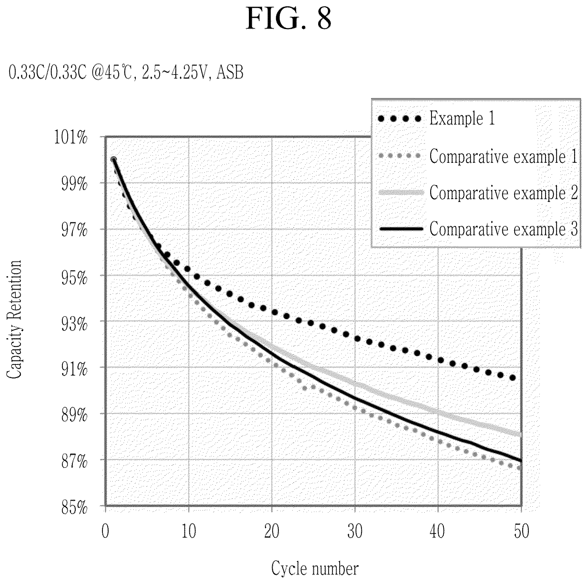

The all-solid-state rechargeable battery cells of Example 1 and Comparative Examples 1 to 3 were each initially charged and discharged as in Evaluation Example 1 and then, 50 times repeatedly charged and discharged at 0.33 C within a voltage range of 2.5 V to 4.25 V at 45 °C to respectively measure initial discharge capacity and 50th discharge capacity and then, calculate a ratio of the 50th discharge capacity to the initial discharge capacity as a capacity retention rate, and the results are shown in FIG. 8 and Table 3.

Table 3

| | Initial discharge capacity (mAh/g) | 50th discharge capacity (mAh/g) | Capacity retention rate (%) |
|---|---|---|---|
| Example 1 | 161.9 | 146.6 | 90.5% |
| Comparative Example 1 | 156.8 | 135.8 | 86.6% |
| Comparative Example 2 | 145.6 | 128.2 | 88.1% |
| Comparative Example 3 | 153.5 | 133.5 | 87.0% |

Referring to FIG. 8 and Table 3, Example 1 exhibited improved cycle-life initial discharge capacity, compared to Comparative Examples 1 to 3, and in addition, its capacity retention rate was improved.

Comparative Example 2, in which no buffer layer was coated, exhibited low initial discharge capacity due to very large interfacial resistance between positive electrode active material and solid electrolyte and formation of a side reaction layer with the solid electrolyte.

Comparative Example 1, in which boron was coated inside and outside of secondary particles, exhibited significantly improved initial discharge capacity due to reduced interfacial resistance between positive electrode active material and solid electrolyte, compared to Comparative Example 2.

However, because the boron coating layer alone did not sufficiently suppress or reduce the side reaction with the solid electrolyte, Example 1, in which the Zr component was coated, exhibited a higher capacity retention rate.

In addition, compared to Comparative Example 3 applying a generally-used non-radial positive electrode active material, Example 1 implementing a more radial type (kind) in the hydroxide synthesis step (e.g., act or task) exhibited high cycle-life initial discharge capacity and a high capacity retention rate. This is understood to be because lithium was easy to move inside positive electrode active material particles, and a volume expansion of the positive electrode active material particles were minimized or reduced.

**Evaluation Example 3: Analysis of Cross-section of Positive Electrode Active Material**

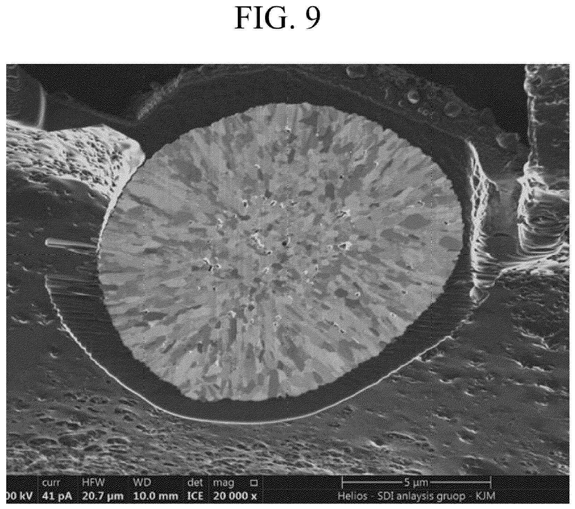

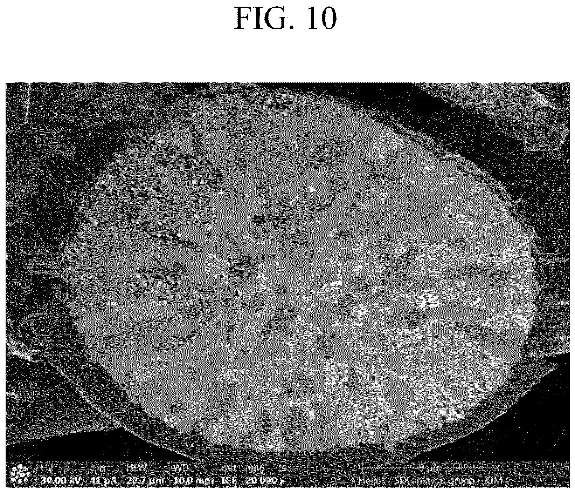

FIG. 9 is an SEM image of a cross-section obtained by cutting the positive electrode active material of Example 1 with a focused ion beam (FIB), and FIG. 10 is an SEM image of a cross-section obtained by cutting the positive electrode active material of Comparative Example 3 with the focused ion beam (FIB).

Referring to FIG. 9, the positive electrode active material of Example 1 was confirmed that there was a porous layer in the center portion, while thin primary particles were aligned on the outer surface.

In contrast, referring to FIG. 10, the positive electrode active material of Comparative Example 3 exhibited that most of primary particles were not radially aligned. It is understood that lithium ion movement inside the particles and volume changes of particles during the charge and discharge were different depending on internal structures of the positive electrode active materials, affecting initial performance and cycle-life characteristics as shown in Evaluation Examples 1 and 2.

**Evaluation Example 4: Zr Distribution Analysis using STEM-EDS**

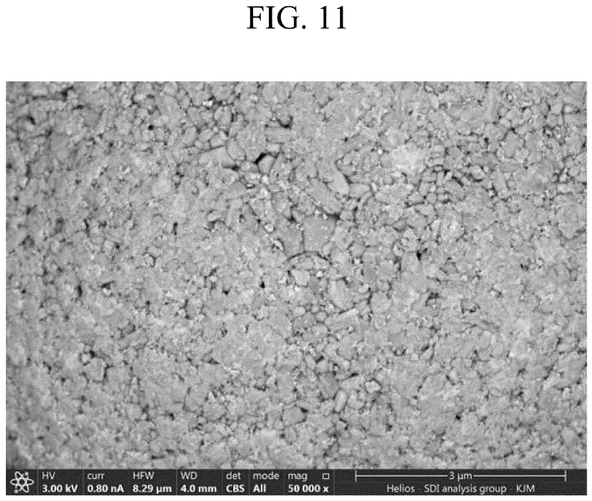

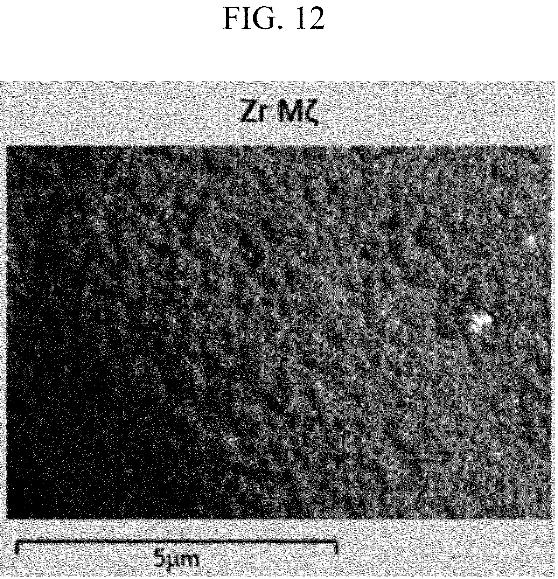

The positive electrode active material of Example 1 was taken an image of its surface with STEM, shown in FIG. 11, and then a Zr distribution was obtained through EDS, shown in FIG. 12.

Referring to FIG. 11 and FIG. 12, it was confirmed that Zr was evenly distributed on the surface of the positive electrode active material, and a second coating layer containing Zr was confirmed to be 130 nm thick.

**Evaluation Example 5: Analysis of Coating Layer Crystal Phase using HRTEM**

In order to analyze crystal phases existing in the coating layer of the positive electrode active material, the positive electrode active material of Example 1 was taken an image of its cross-section by using HRTEM, and from the image, a thickly coated portion of the positive electrode active material surface was selected and then, subjected to Inverse Fast Fourier Transform (IFFT) to more precisely check lattice spacing information for an arbitrary specific region. In order to more precisely check the lattice spacing information for the corresponding region, when the image was enlarged at a high magnification to verify a periodic alignment of crystal lattices in two specific regions in the coating layer, it was confirmed that a $ZrO_2$ region with the lattice spacing $d_{111}$ of 3.16 Å and a $Li_6Zr_2O_7$ region with the lattice spacing $d_{112}$ of 3.45 Å were present.

By synthesizing the analysis results, it was confirmed that the coating layer of the positive electrode active material of Example 1 included a $ZrO_2$ crystal phase, a $Li_6Zr_2O_7$ crystal phase, and a Zr-containing amorphous phase.

In addition, when the positive electrode active materials of Comparative Examples 4 and 5 were analyzed in the same method as in that of Example 1, because the lattice spacing of crystal lattices corresponding to the $ZrO_2$ crystal phase was confirmed, but that of a crystal lattice corresponding to the $Li_6Zr_2O_7$ crystal phase was not confirmed, Comparative Examples 4 and 5 were confirmed that there was the $ZrO_2$ crystal phase alone but not the $Li_6Zr_2O_7$ crystal phase. For example, the results of Evaluation Examples 4 and 5 confirm that the second coating layer formed on the surface of the positive electrode active material in Example 1 is not only uniformly distributed but also structurally and chemically distinct, including both crystalline phases ($ZrO_2$ and $Li_6Zr_2O_7$) and an amorphous Zr-containing phase. This layered composition contributes to enhanced interfacial stability with the solid electrolyte, improved lithium-ion conductivity, and suppression of side reactions. The presence of the $Li_6Zr_2O_7$ phase, in particular, distinguishes the inventive material from Comparative Examples 4 and 5, where only $ZrO_2$ was detected. These findings support the inventive concept that the dual-phase Zr-containing coating, formed through controlled mixing and heat treatment, improvs the electrochemical performance and cycle-life of all-solid-state rechargeable batteries.

**Reference Numerals**

| | | | |
|---|---|---|---|
| 11: | secondary particle | 12: | internal portion of secondary particle |
| 13: | primary particle | 14: | external portion of secondary particle |
| 100: | all-solid-state battery | 200: | positive electrode |
| 201: | positive electrode current collector | | |
| 203: | positive electrode active material layer | | |
| 300: | solid electrolyte layer | 400: | negative electrode |
| 401: | negative electrode current collector | | |
| 403: | negative electrode active material layer | | |

(continued)

| | |
|---|---|
| 400': | precipitation-type (kind) negative electrode |
| 404: | lithium metal layer |
| 405: | negative electrode coating layer |
| 500: | elastic layer |

**Claims**

1. A positive electrode active material, comprising

   a plurality of secondary particles (11) each comprising a lithium transition metal-based composite oxide and formed by agglomerating a plurality of primary particles (13),
   wherein at least a portion of the primary particles (13) is arranged radially in the secondary particle (11),
   a first coating layer on a surface of the secondary particles (11) and comprising boron, and
   a second coating layer on the first coating layer and comprising $ZrO_2$ and $Li_6Zr_2O_7$,
   wherein the positive electrode active material is a positive electrode active material for an all-solid-state rechargeable battery (100).

2. The positive electrode active material as claimed in claim 1, wherein
   the boron is in an amount of 0.01 wt% to 0.5 wt%, based on 100 wt% of a total weight of a total metal excluding lithium in the positive electrode active material.

3. The positive electrode active material as claimed in claim 1 or 2, wherein

   the positive electrode active material further comprises (i) a grain boundary boron coating portion on a surface of primary particles (13) inside the secondary particle (11) and/or (ii) a boron doping layer inside the primary particles (13) exposed on the surface of the secondary particle (11), and
   the boron doping layer is located within a depth of up to 10 nm from an outer surface of the primary particles (13) exposed to the surface of the secondary particle (11) and is present in a layer form along a surface perimeter of the secondary particle (11).

4. The positive electrode active material as claimed in claim 3, wherein:

   a weight of boron in the first coating layer is at least four times a weight of boron in the grain boundary boron coating portion; or
   a ratio of the weight of boron in the first coating layer to the weight of boron in the grain boundary boron coating portion is 70:30 to 98:2.

5. The positive electrode active material as claimed in any one of the preceding claims, wherein

   the first coating layer comprises boron oxide, lithium boron oxide, or a combination thereof; and/or
   the second coating layer comprises a $ZrO_2$ crystal phase, a $Li_6Zr_2O_7$ crystal phase, and a Zr-containing amorphous phase.

6. The positive electrode active material as claimed in any one of the preceding claims, wherein
   a zirconium amount of the second coating layer is in an amount of 0.1 parts by mole to 0.6 parts by mole, based on 100 parts by mole of a total metal excluding lithium in the lithium transition metal-based composite oxide of the positive electrode active material.

7. The positive electrode active material as claimed in any one of the preceding claims, wherein
   a thickness of the second coating layer is 5 nm to 300 nm.

8. The positive electrode active material as claimed in claim 1, wherein

   the lithium transition metal-based composite oxide is a lithium nickel-based composite oxide,

in particular, wherein
the lithium transition metal-based composite oxide is a lithium nickel-cobalt-aluminum-based composite oxide represented by Chemical Formula 1:

Chemical Formula 1 $\quad\quad Li_{a1} Ni_{x1}CO_{y1}Al_{z1}M^1{}_{w1}O_{2-b1}X_{b1}$,

in Chemical Formula 1, $0.9 \leq a1 \leq 1.2$, $0.7 \leq x1 < 1$, $0 < y1 < 0.3$, $0 < z1 < 0.3$, $0 \leq w1 < 0.3$, $0.9 \leq x1+y1+z1+w1 \leq 1.1$, and $0 \leq b1 \leq 0.1$, $M^1$ being at least one element selected from among B, Ba, Ca, Ce, Cr, Cu, Fe, Mg, Mo, Nb, Si, Sr, Sn, Ti, V, W, Mn, Y, Se, Zn, and Zr, and X being at least one element selected from among F, P, and S.

9. The positive electrode active material as claimed in any one of the preceding claims, wherein
an average particle diameter $D_{50}$ of the secondary particles is 8 $\mu$m to 25 $\mu$m obtained by scanning electron microscope image analysis.

10. A method, comprising

(i) mixing

a positive electrode active material precursor in a form of secondary particles (11) each comprising a transition metal-based composite hydroxide and formed by agglomerating a plurality of primary particles (13), wherein at least a portion of the primary particles (13) is arranged radially in the secondary particle (11), a lithium raw material, and
a boron raw material, and
performing a first heat treatment at a temperature of 650 °C to 850 °C to obtain a boron-coated preliminary positive electrode active material; and

(ii) mixing

the boron-coated preliminary positive electrode active material and
a zirconium raw material, and
performing a second heat treatment to obtain a positive electrode active material, wherein the method is a method of preparing a positive electrode active material for an all-solid-state rechargeable battery (100).

11. The method as claimed in claim 10, wherein

the lithium raw material is mixed so that a molar ratio of lithium to a total metal in the transition metal-based composite hydroxide is 0.8 to 1,
the boron raw material comprises $H_3BO_3$, $HBO_2$, $B_2O_3$, $C_6H_5B(OH)_2$, $(C_6H_5O)_3B$, $[CH_3(CH_2)_3O]_3B$, $C_{13}H_{19}BO_3$, $C_3H_9B_3O_6$, $(C_3H_7O)_3B$, or a combination thereof, and the boron raw material is mixed so that a boron amount is 0.01 parts by mole to 0.5 parts by mole, based on 100 parts by mole of a total metal except lithium in the transition metal-based composite hydroxide.

12. The method as claimed in claim 10 or 11, wherein

the first heat treatment is performed for 5 hours to 25 hours,
in particular, wherein
the first heat treatment comprises a temperature increase step comprising a temperature increase time and a temperature maintenance step comprising a temperature maintenance time,
the temperature increase time is longer than the temperature maintenance time,
a ratio of temperature increase time to temperature maintenance time is 1.1:1 to 10:1, the temperature increase time is 6 hours to 16 hours, and
the temperature maintenance time is 1 hour to 9 hours.

13. The method as claimed in any one of claims 10 to 12,

wherein the zirconium raw material is in a form of particles comprising zirconium oxide,
wherein an average particle diameter $D_{50}$ of the particles comprising zirconium oxide is 10 nm to 500 nm obtained by scanning electron microscope image analysis, and

wherein the second heat treatment is performed in an oxygen atmosphere at a temperature range of 420 °C to 580 °C for 5 hours to 25 hours.

**14.** The method as claimed in any one of claims 10 to 13, wherein

in the (ii) mixing,
the boron-coated preliminary positive electrode active material and the zirconium raw material are dry mixed,
in the dry mixing, a lithium raw material is mixed together, and
an amount of the lithium raw material is greater than 1 part by mole and less than or equal to 4 parts by mole, based on 1 part by mole of the zirconium raw material.

**15.** An all-solid-state rechargeable battery (100), comprising

a positive electrode comprising the positive electrode active material as claimed in claim 1 and a sulfide-based solid electrolyte,
a negative electrode, and
a solid electrolyte layer between the positive electrode and the negative electrode.

# FIG. 1A

# FIG. 1B

# FIG. 1C

# FIG. 2

# FIG. 3

# FIG. 4

# FIG. 5

FIG. 6

100

500

201 } 200
203
300
403 } 400
401
500

# FIG. 7

0.1C Formation @ 45℃ 2.5~4.25V, ASB

# FIG. 8

0.33C/0.33C @45℃, 2.5~4.25V, ASB

# FIG. 9

# FIG. 10

FIG. 11

# FIG. 12

Europäisches
Patentamt
European
Patent Office
Office européen
des brevets

# EUROPEAN SEARCH REPORT

**Application Number**

EP 25 20 2645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/136505 A1 (MANTHIRAM ARUMUGAM [US] ET AL) 25 April 2024 (2024-04-25) * the whole document * | 1-15 | INV.<br>C01G53/42<br>C01G53/80<br>H01M4/04 |
| A | EP 3 333 944 A1 (LG CHEMICAL LTD [KR]) 13 June 2018 (2018-06-13) * the whole document * | 1-15 | H01M4/131<br>H01M4/36<br>H01M4/525<br>H01M4/62 |
| A | US 2016/079597 A1 (FUJIKI SATOSHI [JP] ET AL) 17 March 2016 (2016-03-17) * the whole document * | 1-15 | C01D15/00 |
| A | US 2015/340689 A1 (SONG YU-MI [KR] ET AL) 26 November 2015 (2015-11-26) * the whole document * | 1-15 | |

**TECHNICAL FIELDS SEARCHED (IPC)**

C01G
H01M

The present search report has been drawn up for all claims

| Place of search | Date of completion of the search | Examiner |
|---|---|---|
| Munich | 4 February 2026 | Nemes, Csaba A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT
## ON EUROPEAN PATENT APPLICATION NO.

EP 25 20 2645

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2026

| Patent document cited in search report | | Publication date | Patent family member(s) | | Publication date |
|---|---|---|---|---|---|
| US 2024136505 | A1 | 25-04-2024 | CN 117810382 A | | 02-04-2024 |
| | | | EP 4345067 A1 | | 03-04-2024 |
| | | | JP 7716719 B2 | | 01-08-2025 |
| | | | JP 2024052476 A | | 11-04-2024 |
| | | | KR 20240045970 A | | 08-04-2024 |
| | | | US 2024136505 A1 | | 25-04-2024 |
| EP 3333944 | A1 | 13-06-2018 | CN 108140820 A | | 08-06-2018 |
| | | | EP 3333944 A1 | | 13-06-2018 |
| | | | KR 20170103662 A | | 13-09-2017 |
| | | | US 2018261832 A1 | | 13-09-2018 |
| | | | US 2020274152 A1 | | 27-08-2020 |
| US 2016079597 | A1 | 17-03-2016 | NONE | | |
| US 2015340689 | A1 | 26-11-2015 | KR 20150134161 A | | 01-12-2015 |
| | | | US 2015340689 A1 | | 26-11-2015 |

EPO FORM P0459

For more details about this annex : see Official Journal of the European Patent Office, No. 12/82